(19) Europäisches Patentamt
European Patent Office
Office européen des brevets

(11) EP 4 269 049 A1

(12) EUROPEAN PATENT APPLICATION
published in accordance with Art. 153(4) EPC

(43) Date of publication:
**01.11.2023 Bulletin 2023/44**

(21) Application number: **21909743.3**

(22) Date of filing: **11.03.2021**

(51) International Patent Classification (IPC):
***B25J 19/00*** *(2006.01)* ***G05B 17/00*** *(2006.01)*
***G06G 7/62*** *(2006.01)* ***G06F 30/20*** *(2020.01)*

(52) Cooperative Patent Classification (CPC):
**B25J 9/1656; B25J 19/00; G05B 17/00; G06F 30/20; G06G 7/62**

(86) International application number:
**PCT/JP2021/009843**

(87) International publication number:
**WO 2022/137581 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.12.2020 JP 2020213178**

(71) Applicant: **OMRON Corporation**
**Kyoto 600-8530 (JP)**

(72) Inventor: **IWAMURA, Shintaro**
**Kyoto-shi, Kyoto 600-8530 (JP)**

(74) Representative: **Mewburn Ellis LLP**
**Aurora Building**
**Counterslip**
**Bristol BS1 6BX (GB)**

# (54) SIMULATION DEVICE AND SIMULATION PROGRAM

(57) Routing of a cable attached to an instrument is previously designed. A cable simulator (165) calculates a behavior of a target corresponding to a partial cable (341, 342, 343) calculated using each of a plurality of parameter sets for each partial cable, and calculates a load applied to the target based on the calculated behavior. The cable simulator determines a parameter set used for calculation of a behavior having a load satisfying a constraint for each partial cable, and decides a parameter set regarding attachment of an entire cable from a set of determined parameter sets.

FIG.1

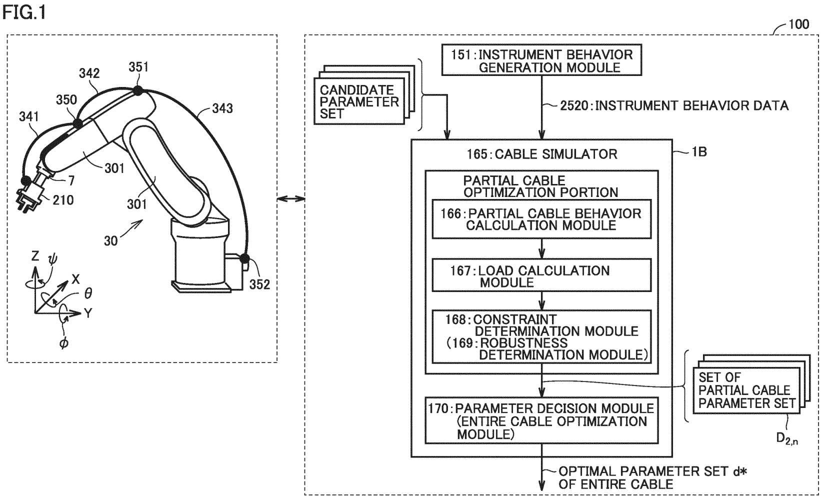


EP 4 269 049 A1

## Description

TECHNICAL FIELD

The present disclosure relates to a simulation device and a simulation program capable of estimating a behavior of a target disposed in a three-dimensional virtual space.

BACKGROUND ART

Simulation using a computer is applied to various technical fields. As an example in which such the simulation is used for factory automation (FA), for example, PTL 1 (Japanese Patent Laying-Open No. 2016-042378) discloses simulation of a control program executed in a controller that controls movement of a machine.

CITATION LIST

PATENT LITERATURE

PTL 1: Japanese Patent Laying-Open No. 2016-042378

SUMMARY OF INVENTION

TECHNICAL PROBLEM

In the field of the FA, there has been a demand for designing previously routing of a cable attached to an industrial robot that is an example of the machine. More specifically, conventionally, in the case of routing the cable of the industrial robot, a user performs an operation of determining an appropriate attachment position or a cable length while actually operating the cable, but this operation requires a long time because trial and error is repeated. Accordingly, there has been the demand for designing previously the cable routing (such as the attachment position or the cable length).

An object of the present disclosure is to provide a simulation device and a simulation program capable of previously designing the routing of the cable attached to an instrument.

SOLUTION TO PROBLEM

A simulation device according to this disclosure that calculates a behavior of a cable attached to an instrument through a plurality of guides, the simulation device includes: a partial cable behavior calculation unit configured to calculate the behavior of a second target disposed in the virtual space corresponding to a partial cable between the guides using a parameter set regarding cable attachment including a position and a posture of each of the plurality of guides in a virtual space and a partial cable length between the guides based on the behavior of a first target corresponding to the device disposed in the virtual space; a load calculation unit configured to calculate a load applied to the second target corresponding to the partial cable based on the behavior of the second target corresponding to the partial cable calculated by the partial cable behavior calculation unit using the parameter set for each of a plurality of the parameter sets for the each partial cable; a parameter determination unit configured to determine whether calculated magnitude of the load of the second target corresponding to the partial cable satisfies a constraint for each of the plurality of parameter sets for the each partial cable; and a parameter decision unit configured to decide a parameter set satisfying a condition regarding attachment of the entire cable into which partial cables are integrated, from at least one parameter set determined by the parameter determination unit to satisfy the constraint for the each partial cable.

According to this disclosure, the parameter set can be determined for each partial cable, and the parameter set for attaching the entire cable to the instrument can be determined from the determined parameter set of each partial cable.

In the above disclosure, the constraint may include a condition that the magnitude of the load applied to the second target corresponding to the partial cable does not exceed a threshold.

According to this disclosure, the parameter of each partial cable can be determined according to the condition that the magnitude of the load applied to the second target corresponding to the partial cable does not exceed the threshold.

In the above disclosure, the constraint may include a condition that the magnitude of the load applied to the second target corresponding to the partial cable does not exceed a threshold when the length of the partial cable changes within a predetermined range.

According to this disclosure, the condition that the magnitude of the load does not exceed the threshold even when the length of the partial cable changes in a predetermined range, namely, the condition that robustness with respect to the length of the cable is satisfied can be applied to the condition of the parameter determination of the partial cable.

In the above disclosure, the condition regarding the attachment of the entire cable may include a condition that a position and a posture of a guide shared between the adjacent partial cables are common.

According to this disclosure, the condition of the parameter of the entire cable includes the condition that the position and the posture of the guide shared between the adjacent partial cables are common.

In the above disclosure, the behavior of the first target may include a behavior calculated for each predetermined time step, and the partial cable behavior calculation unit may calculate the behavior of the second target using the parameter set based on the behavior of the first target corresponding to the time step for each time step.

According to the above disclosure, the behavior of the cable can be calculated for each time step based on the behavior of the instrument calculated for each time step.

In the above disclosure, the partial cable behavior calculation unit may include a physical simulator.

According to the above disclosure, the behavior of the cable can be calculated using the physical simulator.

In the above disclosure, the second target may include a rigid link modeled by joining adjacent rigid bodies with a j oint in a row, and the physical simulator may calculate the behavior of the second target by performing an arithmetic operation according to an equation representing a relationship between positions and postures of adjacent rigid bodies in the modeled rigid link and a constraint condition imposed on a relationship between positions and postures of the rigid bodies, the constraint condition being a condition corresponding to the joint, based on the behavior of the first target.

According to the above disclosure, the cable can be modeled as a rigid link to which the constraint condition is imposed and calculate the behavior by an equation indicating the model.

In the above disclosure, the constraint condition may include a parameter representing hardness of the cable.

According to the above disclosure, the behavior of the second target corresponding to the partial cable can be calculated using the hardness of the cable to be attached to the instrument.

In the above disclosure, the load may include a load applied to each of the rigid bodies included in the second target.

According to the above disclosure, the load applied to each rigid body can be calculated.

The above-described disclosure may further include an evaluation unit configured to evaluate the behavior of the second target calculated by the partial cable behavior calculation unit based on the calculated load.

According to the above disclosure, the behavior of the corresponding second target can be evaluated based on the calculated load for each partial cable.

In the above disclosure, the instrument may include a robot, and the behavior of the first target may be calculated by emulation of a robot program having an instruction code operating the robot.

According to the above disclosure, the simulation of the behavior of the cable attached to the robot can be performed based on the behavior of the first target calculated by the emulator of the robot program.

In the above disclosure, the simulation device may calculate a behavior of a target corresponding to a peripheral instrument of the robot disposed in the virtual space by executing a simulation program including an instruction or a parameter controlling a peripheral instrument.

According to the above disclosure, the behavior of the second target corresponding to the cable and the behavior of the target corresponding to the peripheral instrument can be calculated in the same virtual space.

In the above disclosure, the simulation device may further include an image generation unit configured to generate an image visualizing the virtual space.

According to the above disclosure, the virtual space of the simulated object disposition can be visualized and provided to the user.

A simulation program according to the present disclosure is a program that causes a computer to execute a method for calculating a behavior of a cable attached to an instrument through a plurality of guides.

The method includes: calculating the behavior of a second target disposed in the virtual space corresponding to a partial cable between the guides using a parameter set regarding cable attachment including a position and a posture of each of the plurality of guides in a virtual space and a partial cable length between the guides based on the behavior of a first target corresponding to the instrument disposed in the virtual space; and determining a parameter for each of the partial cable, the determining the parameter includes: calculating a load applied to the second target corresponding to the partial cable based on the behavior of the second target corresponding to the partial cable calculated using the parameter set for each of a plurality of the parameter sets for the each partial cable; and determining whether calculated magnitude of the load of the second target corresponding to the partial cable satisfies a constraint for each of the plurality of parameter sets for the each partial cable, and the method further includes deciding a parameter set satisfying a condition regarding attachment of the entire cable into which partial cables are integrated, from at least one parameter set determined to satisfy the constraint for the each partial cable in the determining the parameter.

According to this disclosure, the parameter set can be determined for each partial cable, and the parameter set for attaching the entire cable to the instrument can be determined from the determined parameter set of each partial cable.

ADVANTAGEOUS EFFECTS OF INVENTION

According to the present disclosure, the routing of the cable attached to the instrument can be previously designed.

BRIEF DESCRIPTION OF DRAWINGS

Fig. 1 is a diagram schematically illustrating an example of an application scene of a cable simulation device 1B according to an embodiment.
Fig. 2 is a view schematically illustrating an instrument simulated by a simulation device 1 of the embodiment.
Fig. 3 is a schematic diagram illustrating an example of a unit configuration of a control system 2 of the embodiment.
Fig. 4 is a schematic diagram illustrating an example of a hardware configuration implementing the simulation device 1 of the embodiment.
Fig. 5 is a schematic diagram illustrating an example of a functional configuration implementing the simulation device 1 of the embodiment.
Fig. 6 is a view schematically illustrating an example of a model of a robot arm to which a cable and a guide are attached.
Fig. 7 is a view schematically illustrating a model of a partial cable for simulation.
Fig. 8 is a view schematically illustrating an example of a physical simulation model of a cable of the embodiment.
Fig. 9 is a view illustrating an example of simultaneous equations 147 of the physical simulation model of the cable in Fig. 8.
Fig. 10 is a view schematically illustrating update of a position of physical simulation of the embodiment.
Fig. 11 is a view schematically illustrating an example of a simulation sequence of the embodiment.
Fig. 12 is a processing flowchart illustrating cable simulation (step S100) in Fig. 11.
Fig. 13 is a processing flowchart illustrating partial cable optimization processing (step S110) in Fig. 12.
Fig. 14 is a processing flowchart illustrating entire cable optimization processing (step S120) in Fig. 12.
Fig. 15 is a view illustrating a number of segments to be optimized and a position and posture of a guide in the robot arm.
Fig. 16 is a view schematically illustrating an example of pick-and-place motion of the robot arm.
Fig. 17 is a graph illustrating a result of simulation.
Fig. 18 is a view illustrating a relationship between each motion in Fig. 17, an optimal parameter set of an entire cable, and a shape of the cable.
Fig. 19 is a view schematically illustrating a method for estimating a spring constant.
Fig. 20 is a view illustrating measured vertical displacement with respect to each cable length in a part (a) in Fig. 19 in a tabular form.
Fig. 21 is a view schematically illustrating a relationship between twist moment and a twist angle with respect to an axis of a column.
Fig. 22 is a graph illustrating a relationship between the twist angle and the twist moment.
Fig. 23 is a view schematically illustrating an example of a UI screen regarding parameter setting of the cable of the embodiment.
Fig. 24 is a view illustrating an example of a screen illustrating an implementable parameter set of the embodiment in the tabular format.

DESCRIPTION OF EMBODIMENTS

With reference to the drawings, an embodiment will be described below. In the following description, the same components and constituents are denoted by the same reference numerals. Those names and functions are the same. Accordingly, the detailed description thereof will not be repeated.

<A. Application example>

An example of a scene to which the present invention is applied will be described. Fig. 1 is a diagram schematically illustrating an example of an application scene of a cable simulation device 1B according to an embodiment.

Referring to Fig. 1, cable simulation device 1B calculates (estimates) a behavior of a cable that can be attached to a robot 30 that is an example of an instrument included in a production line of FA. The instrument to which the cable is attached is not limited to robot 30. In addition, robot 30 includes, but is not limited to, for example, an arm 301 configured of an articulated configuration. Robot 30 includes a robot hand 210 detachably attached to arm 301 at a distal end by a connector 7. The cable is attached through a cable guide of robot hand 210 and cable guides 350 and 351 installed on a surface 306 (see Fig. 8) of arm 301. Hereinafter, the cable guide is also simply referred to as a guide. In a state where the cable is attached to robot 30 by a plurality of guides, the cable between the guides is referred to as a partial cable. In Fig. 1, the partial cables include a partial cable 341 between the guide and guide 350 of robot hand 210, a partial cable 342 between guides 350 and 351, and a partial cable 343 between guides 351 and 352. Hereinafter, a cable in which all the partial cables are connected is referred to as an entire cable 340 or a cable 340 in order to be distinguished from the partial cables.

Partial cables 341, 342 and 343 are referred to as "partial cables" in the description that is common to partial cables 341, 342 and 343. For example, cable 340 is configured by covering a linear conductor configuring a signal line with an insulator. A material of the insulator is not limited, but a resin material such as plastic, rubber, or vinyl can be used. The material of the conductor is not limited, but a metal having electrical conductivity can be used. For example, cable 340 may include an air cable through which gas such as air flows. Furthermore, since guides 350, 351, and 352 have similar features (shape, material, and the like), guides 350, 351, and 352 are collectively referred to as "guides" in the description common thereto. When cable 340 is attached to robot 30 via the guide, another instrument such as robot controller 310 (see Fig. 2) can exchange the signal with robot 30 through cable 340.

Considering that cable 340 for the robot is generally expensive and the routing work requires a long time as described above, when the appropriate routing of cable 340 attached to actual robot 30 is previously designed and when the user performs the routing of the cable 340 based on the design result, cost including expenditure and work time that are required for the routing of cable 340 can be reduced. This pre-design is implemented by performing cable simulation by cable simulation device 1B.

More specifically, an information processing device 100 includes cable simulation device 1B and an instrument behavior generation module 151 that generates instrument behavior data 2520 indicating the behavior of the instrument (robot 30). Cable simulation device 1B includes a cable simulator 165 that calculates (estimates) a behavior in a three-dimensional virtual space of an object (hereinafter, also referred to as a second target) corresponding to cable 340 attached to robot 30. Instrument behavior data 2520 indicates the behavior of an object (hereinafter, also referred to as a first target) corresponding to robot 30 and disposed in the same space as the three-dimensional virtual space in which the object of an entire cable 340 is disposed. The "first target" includes, but is not limited to, for example, an object corresponding to robot 30 and robot hand 210 attached to robot 30.

Cable simulator 165 calculates the behavior of the object in the three-dimensional virtual space using instrument behavior data 2520 and a plurality of parameter sets. For example, a three-dimensional absolute coordinate system defined by orthogonal X-, Y-, and Z-axes is applied to the three-dimensional virtual space. For example, cable simulation device 1B can be implemented in information processing device 100 configured of a general-purpose computer, and information processing device 100 executes a predetermined program, thereby implementing instrument behavior generation module 151, cable simulator 165, and an evaluation module 177.

Cable simulator 165 calculates the behavior of cable 340 attached through a plurality of guides installed in robot 30, and determines an optimal parameter set regarding the attachment of entire cable 340 from among the plurality of parameter sets based on the calculated behavior. In order to determine the optimal parameter set regarding the attachment of entire cable 340, cable simulator 165 includes a partial cable optimization unit that optimizes a parameter set of each partial cable and an entire cable optimization unit that optimizes a parameter set of entire cable 340. The partial cable optimization unit is an example of the "parameter determination unit" that determines the optimal parameter set regarding the attachment for each partial cable. In the present disclosure, the parameter set regarding the attachment includes a position and posture of the guide and the cable length.

The partial cable optimization unit includes a partial cable behavior calculation module 166 that is an example of the "partial cable behavior calculation unit", a load calculation module 167 that is an example of the "load calculation unit", a constraint determination module 168 that is an example of the "constraint determination unit", and a robustness determination module 169. Partial cable behavior calculation module 166 optimizes, for each partial cable between guides installed at adjacent positions, the parameter set regarding the attachment of the partial cable using load calculation module 167, constraint determination module 168, and robustness determination module 169. More specifically, in information processing device 100, partial cable behavior calculation module 166 calculates the behavior of the second target disposed in the virtual space corresponding to the partial cable between the guides for each parameter set using each parameter set including the position of each guide in the virtual space and the partial cable length between the guides based on the behavior (instrument behavior data 2520) of the first target corresponding to the instrument disposed in the virtual space.

Load calculation module 167 calculates the load applied to the second target based on the behavior of the second target corresponding to each partial cable calculated by partial cable behavior calculation module 166 for each of the plurality of parameter sets. The type of load calculated by load calculation module 167 is not limited, but may include, for example, bending, elongation, twisting, and impact (collision of the second target) of the second target when the instrument behaves according to instrument behavior data 2520, force (reaction force) applied to the second target in the case of collision, and the like.

Constraint determination module 168 determines whether magnitude of the load calculated for the second target corresponding to each partial cable satisfies the constraint. More specifically, the constraint may include a condition that the magnitude of the load does not exceed a threshold. Furthermore, the constraint may include a condition (hereinafter, also referred to as a robustness condition) that the magnitude of the load applied to the second target corresponding to the partial cable does not exceed the threshold even when the length of each partial cable changes within a predetermined range. When the magnitude of various loads does not exceed the threshold, constraint determination module 168 determines that the magnitude of the various loads satisfies the constraint. Robustness determination module 169 determines whether the magnitude of the load calculated for the corresponding second target of each partial cable satisfies the above robustness condition.

Cable simulator 165 determines, for each partial cable, at least one parameter set determined by constraint determination module 168 or robustness determination module 169 to satisfy the constraint (or the constraint including the robustness condition) as a set $D_{2,n}$ of the optimal parameter set of the partial cable.

A parameter decision module 170 of the entire cable optimization unit is an example of the "parameter decision unit". Parameter decision module 170 decides an optimal parameter set d* of the entire cable that satisfies the condition regarding the attachment of entire cable 340 into which partial cables are integrated, from the set $D_{2,n}$ of the optimal parameter set of each partial cable determined to satisfy the constraint. For example, the condition regarding the attachment of entire cable 340 includes the condition that such the parameter set that the cable length of entire cable 340 into which partial cables are integrated is minimized.

In the present disclosure, the parameter set satisfying the constraint may be further configured to satisfy robustness against disturbance such as a calculation error by simulation or a cable mounting error of the user. More specifically, as the optimal parameter set of each partial cable, even when the partial cable length is shortened and extended within a certain range, it is determined that the parameter set that satisfies the above-described constraint is optimum.

Once the optimal parameter set for each partial cable is determined, parameter decision module 170 decides the optimal parameter set regarding the attachment of entire cable 340. Parameter decision module 170 decides optimal parameter set d* of entire cable 340 from a set of optimal parameter sets of each partial cable under an adjacent condition that the position and posture of the guide require to be shared between both partial cables in order to couple the adjacent partial cables. In addition, when a plurality of optimal parameter sets can be obtained for entire cable 340, parameter decision module 170 selects a parameter set that minimizes the length of entire cable 340 from the plurality of optimal parameter sets.

As described above, in the present disclosure, cable simulator 165 optimizes the parameter regarding the cable attachment, namely, the parameter set including the cable length and the position and posture ("the position and posture" represents the position and the posture) at which the guide is installed, for the predetermined motion of robot 30 indicated by instrument behavior data 2520. In the simulation, when the position and posture of the guide attaching entire cable 340 and the cable length between the guides are simultaneously optimized, the number of parameters is too large, and a large amount of cost (calculation time or the like) is required for the simulation. In contrast, cable simulator 165 of the present disclosure performs the optimization of the parameter set regarding the attachment of entire cable 340 in a divided manner into the optimization of the parameter set of each partial cable. Thus, the optimization of the parameter set by the simulation can be replaced with the optimization of a limited number of parameters including the position and posture of the adjacent guides and the partial cable length between the guides. Accordingly, the cost for the simulation can be reduced, and the routing of the cable attached to the instrument can be previously designed using the parameter set of entire cable 340 determined by the simulation.

More specific application examples of the embodiment will be described below.

<B. Example of control system>

Fig. 2 is a view schematically illustrating the instrument simulated by a simulation device 1 of the embodiment. Simulation device 1 includes a system simulation device 1A that estimates the behavior of the instrument that is an actual machine controlled by a programmable logic controller (PLC) 200 of a control system 2 included in the production line of FA. For example, simulation device 1 can be implemented in information processing device 100 configured of a general-purpose computer including a terminal device such as a personal computer (PC) or a tablet terminal, and information processing device 100 executes a predetermined program to implement system simulation estimating the behavior of the instrument. Information processing device 100 provides a support tool that supports the user to operate control system 2. The support tool includes a setting tool that prepares a simulation execution environment, a control program execution environment for control system 2, a communication environment of control system 2, and the like. For example, the support tool is provided to the user by a user interface (UI).

In Fig. 2, information processing device 100 is communicably connected to PLC 200, and can also perform the simulation in a mode not being connected to PLC 200. Cable simulation device 1B described above can be included in simulation device 1. In that case, the environment in which the cable simulation and the system simulation can be performed by simulation device 1 is provided.

Referring to Fig. 2, control system 2 includes PLC 200, a robot controller 310, and a servomotor driver 531, 532. PLC 200, robot controller 310, and servomotor driver 531, 532 are connected in a daisy chain through a field network 22. For example, EtherCAT (registered trademark) is adopted as field network 22. However, field network 22 is not limited to EtherCAT. Information processing device 100 can be connected to PLC 200 through a network 80 in Fig. 3. Any wired or wireless communication means can be adopted for network 80. For example, PLC 200 and information processing device 100 communicate according to a universal serial bus (USB).

PLC 200 executes a designed control program based on a field value including an output value of a sensor from field network 22 and the like, and gives a target value to robot controller 310 or servomotor drivers 531, 532 according to a result of the execution, thereby controlling robot 30, the instrument regarding the conveyance of conveyor 230, and the like.

Similarly, servomotor drivers 531, 532 drive servomotors 41, 42 of conveyor 230. Encoders 236, 238 are disposed on a rotation shaft of servomotor 41, 42. The encoder outputs the position (rotation angle), the rotation speed, the cumulative rotation speed, and the like of the servomotor to PLC 200 as the feedback values of servomotors 41, 42.

Robot 30 and conveyor 230 move a workpiece 232 in cooperation with each other. At this point, in order to simplify the description, the movement of workpiece 232 will be described, but the description is not limited to the movement. For example, workpiece 232 placed on tray 9 may be machining by robot 30.

In Fig. 2, servomotors 1301, 1302, 1033, 1304 (hereinafter, also collectively referred to as a "robot servomotor") provided in robot 30 and robot controller 310 that drives a robot servomotor are illustrated as an example of a drive device of robot 30. Similarly, servomotor drivers 531, 532 that drives servomotors 41, 42 provided on conveyor 230 will be exemplified as an example of the drive device of conveyor 230.

Robot controller 310 drives the robot servomotor of robot 30. An encoder (not illustrated) is disposed on a rotation shaft of each robot servomotor. The encoder outputs the position (rotation angle), rotation speed, cumulative rotation speed, and the like of the servomotor to robot controller 310 as the feedback value of the robot servomotor.

Servomotor drivers 531, 532 drives corresponding servomotors 41, 42 according to the command value. Control system 2 further includes a photoelectric sensor 6 and an openable stopper 8 in connection with conveyor 230. Photoelectric sensor 6 detects that tray 9 provided on the conveying surface of conveyor 230 reaches in front of a predetermined work tracking area, and transmits a detection value to PLC 200. Stopper 8 performs a closing operation to stop (fix) tray 9 that reaches the tracking area according to the command value.

Robot hand 210 of robot 30 is attached according to the process. The type of robot hand 210 includes, but is not limited to, a parallel hand, a multi-finger hand, a multi-finger joint hand, and the like, and for example, may include a type of picking and placing workpiece 232 by a suction type.

For example, robot 30 performs pick and place as the motion according to the command value from robot controller 310. Specifically, robot 30 picks workpiece 232 placed on tray 9 on conveyor 230 by robot hand 210, moves workpiece 232 to a table 55 at a predetermined position while keeping the pick, and places workpiece 232 on table 55. According to the command value from robot controller 310, robot hand 210 controls an opening and closing operation of a hand that performs the pick or place of workpiece 232.

Examples of the instrument in which the behavior is estimated by the simulation performed by system simulation device 1A include conveyor 230 that conveys workpiece 232 and the instrument such as robot 30 (robot 30 and robot hand 210) that handles workpiece 232, but the instrument in which the behavior is estimated is not limited thereto. Cable simulation device 1B calculates (estimates) the behavior of the cable based on the behavior of the instrument calculated (estimated) by the system simulation.

The control program may be designed by information processing device 100 using the result of the simulation. The control program designed on information processing device 100 is transmitted to PLC 200 through field network 22.

PLC 200 may include components of simulation device 1 included in information processing device 100.

<C. Entire configuration of control system>

Fig. 3 is a schematic diagram illustrating an example of a unit configuration of control system 2 of the embodiment. Referring to Fig. 3, control system 2 includes PLC 200, servomotor drivers 531, 532 and a remote IO terminal 5 that are connected to PLC 200 through field network 22, robot controller 310 that connects cable 340, and for example, photoelectric sensor 6 that is an IO device provided in the field, a proximity sensor 87 included in stopper 8, and encoders 236, 238.

PLC 200 includes an arithmetic unit 13 that executes main arithmetic processing, at least one IO unit 14, and a special unit 17. These units are configured to be able to exchange data with each other through a system bus 81, and power is supplied from a power supply unit 12. Information processing device 100 can be connected to arithmetic unit 13 through network 80.

IO unit 14 collects detected values 61, 71 and 237 and 239 from the IO devices including photoelectric sensor 6, proximity sensor 87 of stopper 8, encoder 236, 238, and the like. Proximity sensor 87 contactlessly detects that tray 9 approaches stopper 8 by a predetermined distance. For example, the detection value from each IO device is set (written) in a memory included in IO unit 14. Arithmetic unit 13 executes the arithmetic operation of the control program using the value collected by IO unit 14, and sets (writes) the value of the arithmetic result in the memory of IO unit 14. The peripheral instrument or the IO device operates by referring to the value of the memory of IO unit 14.

Robot controller 310, servomotor driver 531, 532, and remote IO terminal 5 may be connected to field network 22. Remote IO terminal 5 includes a communication coupler 52 performing processing regarding data transmission in field network 22 and at least one IO units 53. These units are configured to be able to exchange the data with each other through a remote IO terminal bus 51.

Servomotor drivers 531, 532 are connected to arithmetic unit 13 through field network 22, and drives servomotors 41, 42 according to an instruction value from arithmetic unit 13. Arithmetic unit 13 generates these command values based on detection values 237, 239 from encoders 236, 238.

Arithmetic unit 13 causes robot 30 to perform the pick and place by executing a predetermined control program with reference to the detection value from the IO device described above. Specifically, when detecting that workpiece 232 approaches a predetermined tracking area from detection value 61 of photoelectric sensor 6 and detection value 71 of proximity sensor 87, arithmetic unit 13 generates a control command 211 for arm 301 of the robot that performs the pick and place and a control command 222 for robot hand 210, and outputs the generated commands to robot 30 through cable 340 through robot controller 310.

<D. Hardware configuration>

An example of a hardware configuration of simulation device 1 of the embodiment will be described below.

Fig. 4 is a schematic diagram illustrating an example of the hardware configuration implementing simulation device 1 of the embodiment. In the embodiment, simulation device 1 can be implemented in information processing device 100 as illustrated in Fig. 4. Specifically, processor 102 of information processing device 100 executes a required program to implement simulation device 1. In Fig. 4, the simulation device 1 includes the environment in which the system simulation and the cable simulation are performed.

Information processing device 100 includes processor 102 that executes an operating system (OS) and various programs as described later, a main memory 104 that provides a work area storing data required for program execution in processor 102, an operation unit 106 such as a keyboard or a mouse that receives a user operation, an output unit 108 such as a display 109 that outputs processing results, various indicators, and a printer, a network interface 110 connected to various networks including network 80, an optical drive 112, a local communication interface 116 that communicates with an external device, and a storage 111 as main components. These components are communicably connected to one another through an internal bus 118 or the like.

Information processing device 100 reads various programs or data from a computer-readable storage medium 114 including an optical storage medium (for example, a digital versatile disc (DVD) or the like) that non-transiently stores a computer-readable program by an optical drive 112, and installs the various programs or data in a storage 111 or the like.

The various programs or the data executed by information processing device 100 may be installed through computer-readable storage medium 114, and installed by being downloaded from a server device (not illustrated) or the like on the network through network interface 110.

For example, storage 111 is configured of a hard disk drive (HDD) or a flash solid state drive (SSD), and stores the program executed by processor 102. Specifically, storage 111 stores a virtual time generation program 120, a relay program 121, a physical simulation program 122, a physical simulation parameter 124 regarding a physical simulation, a PLC simulation program 126, a PLC parameter 128 regarding a PLC simulation, a robot emulation program 130, a robot parameter 132 regarding robot emulation, an integration program 134, and a cable simulation program 137 as simulation programs implementing the simulation of the embodiment. Storage 111 further stores an image processing program 136 generating an image displaying the object disposed in the three-dimensional virtual space, an evaluation program 143, and a parameter setting program 145.

When executed, cable simulation program 137 implements cable simulator 165 including various modules of the partial cable optimization unit in Fig. 1 and parameter decision module 170 of the entire cable optimization unit. Cable simulation program 137 includes a constraint determination program 1371 that implements constraint determination module 168 and a robustness determination program 1372 that implements robustness determination module 169. The load applied to the cable object calculated by executing cable simulation program 137 is stored as load information 142.

Evaluation program 143 evaluates the behavior based on the behavior of the object corresponding to cable 340 calculated by cable simulation program 137, and outputs evaluation data 144 indicating the evaluation result. Evaluation data 144 can be stored in storage 111. The evaluation data includes data evaluating the load applied to the model of the cable in the cable simulation.

For example, parameter setting program 145 stores a cable parameter 139 set based on the user operation content for information processing device 100 in storage 111. Cable parameter 139 includes a constraint parameter 149 including the threshold of the constraint, a robustness parameter 140 including a robustness range R described below, one or a plurality of candidate parameter sets 141, and the like. Cable parameter 139 further includes a bending constant, a damping coefficient, a stiffness value, and the like of cable 340.

Virtual time generation program 120 generates a virtual time for the simulation. Simulation device 1 executes the simulation in a period based on the virtual time.

Physical simulation program 122 calculates the behavior of the object corresponding to the instrument that operates in association with the movement of workpiece 232. For example, the instrument in which the behavior of the corresponding object is calculated by physical simulation program 122 includes photoelectric sensor 6, conveyor 230, tray 9, stopper 8, and robot hand 210 regarding the conveyance or movement of workpiece 232. Physical simulation parameter 124 including a parameter that defines the behavior of the object corresponding to such the instrument and a parameter that defines the weight, shape, or the like of workpiece 232 is given to physical simulation program 122. The value of physical simulation parameter 124 may be appropriately changed by the user operation, integration program 134, or the like.

The instrument regarding the conveyance or movement of workpiece 232 and computer aided design (CAD) data of workpiece 232 may be used as physical simulation parameter 124. The use of the CAD data can more accurately reproduce the behavior of the actual instrument using the object.

PLC simulation program 126 calculates the positions of the instrument and workpiece 232 for which the behavior of the corresponding object is calculated by physical simulation program 122. The calculated position is given to physical simulation program 122. PLC parameter 128 including a parameter required for calculating the position is given to PLC simulation program 126.

Robot emulation program 130 functions as a simulator that reproduces the behavior of robot 30 using the object. Robot emulation program 130 reproduces a predetermined motion handling workpiece 232 by robot 30 based on the result (the behavior of the object) calculated by physical simulation program 122. Robot parameter 132 including the parameter required for reproducing the behavior of robot 30 using the corresponding object is given to robot emulation program 130.

Relay program 121 provides a relay function of exchanging the data between physical simulation program 122 and robot emulation program 130. Relay program 121 is not limited, but for example, the relay function is described by a script command.

Integration program 134 executes processing for causing physical simulation program 122, PLC simulation program 126, robot emulation program 130, and relay program 121 to cooperate with one other. Specifically, integration program 134 typically generates and updates virtual space information 105 that describes the state of the object in the three-dimensional virtual space on main memory 104. Physical simulation program 122, PLC simulation program 126, and robot emulation program 130 execute the processing of each simulation by referring to (reading) virtual space information 105, and reflect required information among the execution results in virtual space information 105. The behavior and processing of the instrument in control system 2 including the instrument that conveys workpiece 232 and robot 30 that moves workpiece 232 by the predetermined motion are reproduced by the function provided by integration program 134.

Three-dimensional (3D) visualization data 135 displayed on display 109 is given to image processing program 136. 3D visualization data 135 includes behavior data 252 and image data 253. Image data 253 includes instrument image data 2530 drawing the object corresponding to the simulated instrument and cable image data 2531 drawing the object corresponding to cable 340. Cable image data 2531 includes image data corresponding to the object of a rigid body 304 (described later).

Behavior data 252 includes instrument behavior data 2520 and cable behavior data 2521 including a three-dimensional coordinate P(x, y, z) that are the position calculated using a predetermined function at the position of each instrument of virtual space information 105 and time-series data thereof. Cable behavior data 2521 indicates the behavior of the object disposed in the three-dimensional virtual space corresponding to cable 340, which is calculated by cable simulator 165 based on the data of instrument behavior data 2520.

Using instrument image data 2530 and instrument behavior data 2520, image processing program 136 generates the image data stereoscopically drawing the behavior of each object of the target in workpiece 232, the instrument and robot 30 regarding the conveyance of workpiece 232, and robot hand 210 attached to robot 30 in the three-dimensional virtual space, and outputs the image data to display 109. In addition, image processing program 136 generates the image data three-dimensionally drawing the behavior of the object corresponding to cable 340 in the three-dimensional virtual space using cable image data 2531 and cable behavior data 2521, and outputs the image data to display 109.

Thus, the object is displayed on display 109 according to the behavior calculated by the simulation, the behavior of the instrument of control system 2 is reproduced, and the behavior of cable 340 linked with the behavior of the instrument is reproduced. Image data 253 may include computer-aided design (CAD) data or the like.

Although Fig. 4 illustrates the example in which simulation device 1 is implemented by single information processing device 100, the simulation device 1 may be implemented by linking a plurality of information processing devices. In this case, part of the processing required for implementing simulation device 1 may be executed by information processing device 100, and the remaining processing may be executed by a server (cloud) or the like on the network.

Although Fig. 4 illustrates the example in which simulation device 1 is implemented by processor 102 executing one or a plurality of programs, some of processes and functions required for implementing simulation device 1 may be implemented using a circuit such as an application specific integrated circuit (ASIC) or a field-programmable gate array (FPGA).

<E. Functional configuration>

An example of a functional configuration of simulation device 1 of the embodiment will be described below. Fig. 5 is a schematic diagram illustrating the example of the functional configuration implementing simulation device 1 of the embodiment. Typically, the function in Fig. 5 is implemented by processor 102 of information processing device 100 executing a program (virtual time generation program 120, relay program 121, physical simulation program 122, PLC simulation program 126, robot emulation program 130, integration program 134, image processing program 136, cable simulation program 137, evaluation program 143, parameter setting program 145, and the like). Simulation device 1 includes functions for system simulation device 1A and cable simulation device 1B, a period generation module 154 that generates execution periods of the system simulation and the cable simulation, and a 3D visualizer 164 that draws the object in the three-dimensional virtual space based on the simulation result. 3D visualizer 164 can include a function implemented by executing image processing program 136.

(E1. Configuration of system simulation device 1A)

Referring to Fig. 5, system simulation device 1A includes a virtual space information management module 150, a PLC simulator 152, a workpiece behavior simulator 155, a physical simulator 156, a relay module 158, a robot emulator 160, and a workpiece tracking module 162.

Virtual space information management module 150 is implemented by executing integration program 134 (Fig. 4), and manages virtual space information 105 defining the information of the behavior (position, posture, and the like) of each object in the three-dimensional virtual space in which the simulation is performed.

PLC simulator 152 is implemented by executing PLC simulation program 126 (Fig. 4), and calculates the behavior of the object corresponding to the instrument regarding the conveyance of workpiece 232 according to physical simulation parameter 124. The information calculated by PLC simulator 152 is reflected in virtual space information 105.

PLC simulator 152 is a program estimating the behavior of the instrument regarding workpiece 232, and corresponds to the simulation program having the plurality of instructions included in the PLC program. The plurality of instructions may include an instruction group controlling the behavior of the instrument regarding the conveyance included in the PLC program. For example, the PLC program is described in a program language described in a cyclic execution language (for example, a ladder language).

Each time these instructions of PLC simulator 152 are executed based on the data of virtual space information 105, for example, command values controlling servomotors 41, 42 of conveyor 230 are generated and stored in virtual space information 105.

Relay module 158 outputs the measurement result of workpiece 232 by the measurement processing using image measurement parameter 129 of workpiece 232 to robot emulator 160. Robot emulator 160 reproduces the behavior of robot 30 that conveys the workpiece disposed in the virtual space according to the measurement result from relay module 158 based on robot parameter 132. The information about the behavior of robot 30 calculated by robot emulator 160 is reflected in virtual space information 105. Robot emulator 160 is implemented by executing robot emulation program 130. Robot emulator 160 outputs instrument behavior data 2520 indicating the behavior of robot 30 that moves workpiece 232 disposed in the three-dimensional virtual space. Robot emulator 160 performs the simulation by regarding arm 301 of robot 30 and robot hand 210 attached to the distal end thereof as the integral rigid body.

Specifically, robot emulation program 130 includes an instruction group included in the program of robot controller 310. The instruction group includes commands of the robot program including an instruction code causing robot 30 to operate workpiece 232. These commands include instructions calculating a target locus of robot 30 based on the output data of PLC simulator 152 of virtual space information 105 and the like and calculating a command value indicating the behavior of each axis based on the calculated locus.

As described above, when executing the instruction, robot emulator 160 generates the command value for each axis in order to control the behavior of robot 30, and outputs the generated command value to virtual space information management module 150. Virtual space information management module 150 manages (stores) the command value from the robot emulator as virtual space information 105.

Workpiece behavior simulator 155 calculates the behavior of the object of one or a plurality of workpieces 232 disposed in the three-dimensional virtual space. Specifically, workpiece behavior simulator 155 is implemented by executing physical simulation program 122 (Fig. 4), and calculates and updates the behavior of workpiece 232 disposed in the three-dimensional virtual space according to the information about the behavior of the object corresponding to a conveyance instrument of workpiece 232 by PLC simulator 152. When calculating the behavior of workpiece 232, workpiece behavior simulator 155 calculates the position, posture, movement speed, movement direction, and the like of workpiece 232. The position and the posture of workpiece 232 are calculated based on workpiece parameters arbitrarily set by the user or the like. The information about the position and the posture of workpiece 232 calculated by workpiece behavior simulator 155 is reflected in virtual space information 105. The workpiece parameter can also be included in physical simulation parameter 124.

Physical simulator 156 is implemented by executing physical simulation program 122 (Fig. 4). Physical simulator 156 calculates the behavior (position, posture, moving speed, moving direction, and the like) of the object corresponding to the instrument carrying or moving workpiece 232 according to physical simulation parameter 124. The target simulated by physical simulator 156 includes photoelectric sensor 6, stopper 8, tray 9, robot hand 210, conveyor 230, and workpiece 232.

Physical simulator 156 calculates the behavior such as the position and posture of these objects according to a predetermined physical arithmetic operation. Physical simulator 156 sets a mass parameter 127 of the object to zero among physical simulation parameters 124 used for the physical arithmetic operation and performs the arithmetic operation.

Physical simulator 156 stores the three-dimensional coordinates P(x, y, z) of robot hand 210 calculated by the physical arithmetic operation as instrument behavior data 2520. Physical simulator 156 is executed for each time step ti (i = 1, 2, 3, •••), so that instrument behavior data 2520 includes time-series three-dimensional coordinates P(x, y, z) corresponding to robot hand 210.

Workpiece tracking module 162 is implemented by executing robot emulation program 130. Workpiece tracking module 162 tracks workpiece 232 picked and placed by robot 30 in the three-dimensional virtual space based on the behavior information about robot 30 from robot emulator 160. The position information (workpiece position) about workpiece 232 tracked by workpiece tracking module 162 is reflected in virtual space information 105.

(E2. Configuration of cable simulation device 1B)

Referring to Fig. 5, cable simulation device 1B includes cable simulator 165 implemented by executing cable simulation program 137 and evaluation module 177 implemented by executing evaluation program 143.

Cable simulator 165 calculates the behavior of the object disposed in the three-dimensional virtual space corresponding to cable 340 using cable parameter 139 based on the data of instrument behavior data 2520 corresponding to a time step ti by being executed for each time step ti, and stores the calculation result as cable behavior data 2521.

Cable simulator 165 acquires cable behavior data 2521 by calculating the behavior of the object corresponding to cable 340 for each time step ti. Acquired cable behavior data 2521 indicates the time-series behavior of cable 340 in the three-dimensional virtual space.

3D visualizer 164 corresponds to an image generation unit that generates an image obtained by visualizing the three-dimensional virtual space. 3D visualizer 164 calculates three-dimensional coordinates P(x, y, z) of the object in the three-dimensional virtual space corresponding to each of workpiece 232, robot 30, robot hand 210, and peripheral instrument based on the command value for each time step ti of virtual space information 105. Instrument behavior data 2520 including time-series three-dimensional coordinates P(x, y, z) is calculated. For example, the peripheral instrument is a peripheral instrument of robot 30 (robot arm 301), and includes an instrument regarding the conveyance of workpiece 232.

3D visualizer 164 generates the image data that visualizes the behavior of the instrument in the three-dimensional virtual space based on instrument behavior data 2520 and instrument image data 2530, and generates the image data that visualizes the behavior of the cable in the three-dimensional virtual space based on cable behavior data 2521 and cable image data 2531. These pieces of image data are output to display 109. Thus, the image indicating the behavior of the instrument calculated by the system simulation and the image indicating the behavior of cable 340 calculated by the cable simulation are displayed on display 109.

Period generation module 154 is implemented by executing virtual time generation program 120. Period generation module 154 outputs a signal ST synchronized with an output of a timer (not illustrated) included in processor 102 to other units based on the output of the timer. Each unit executes the processing or the program in synchronization with predetermined time step ti that is the period in which signal ST is output from period generation module 154. Thus, each unit in Fig. 5 is executed in synchronization with each other for each time step ti. The output period of signal ST is not limited, but may be determined based on a communication period (hereinafter, also referred to as a "control period") of field network 22 according to the time synchronization of control system 2 in Fig. 3. The period indicated by time step ti based on the signal ST may be variable. The value of "i" at time step ti changes to a predetermined maximum value such as 1, 2, 3 ••• in synchronization with the output period of signal ST, and the maximum value can be determined based on the length of the predetermined required time from the start to the end of the motion described above.

When the functions in Fig. 5 cooperate with each other, the behavior of cable 340 linked with the behavior of the instrument can be reproduced.

In the embodiment, simulation device 1 in Fig. 5 can activate one of system simulation device 1A and cable simulation device 1B according to, for example, the instruction from the user received through operation unit 106. In addition, simulation device 1 can determine timing to activate system simulation device 1A or cable simulation device 1B according to, for example, the instruction from the user received through operation unit 106. For example, simulation device 1 sets activation timing of cable simulation device 1B after system simulation device 1A is activated. Thus, when cable simulation device 1B is activated, instrument behavior data 2520 can be provided to the cable simulator.

In Fig. 5, information processing device 100 implements both system simulation device 1A and cable simulation device 1B. However, information processing device 100 may implement only cable simulation device 1B as long as instrument behavior data 2520 is provided to cable simulation device 1B in an available mode.

<F. Three-dimensional virtual space and instrument behavior data>

With reference to Fig. 2 again, the control of robot 30 and conveyor 230, which are the target instruments of the system simulation, and the behaviors of these instruments in the three-dimensional virtual space will be described.

As described above, robot 30 and conveyor 230 include the movable unit movable by the plurality of drive shafts. Each of these drive shafts is driven by the servomotor. Specifically, robot 30 includes a plurality of arms driven by the rotation of the robot servomotor (servomotors 1301 to 1304). The robot servomotor rotates to drive each corresponding arm. Robot controller 310 controls the drive of the robot servomotor, so that each arm moves three-dimensionally. The behavior of robot 30 is implemented by the drive of each arm. Similarly, in conveyor 230, servomotors 41, 42 rotate to move conveyor 230 and tray 9 on the conveyance surface. The movement amount (speed, direction, distance, and the like of movement) is determined by the rotation amount (direction and angle of rotation) of servomotors 41, 42. The behavior of the instruments such as conveyor 230 and tray 9 is implemented by the driving of servomotors 41, 42.

In the embodiment, virtual axes are associated with arm 301 of robot 30, and the position of robot 30 is determined from the position of each axis. PLC 200 controls robot 30 according to the target position converted into the time series of each axis, so that the speed and the track of the movement of each arm 301 change to be the speed and the track according to the target.

For example the target position of robot 30 is previously stored in PLC 200. Robot controller 310 receives the target position from PLC 200, determines the rotation amount of each robot servomotor based on the received target position, and outputs the instruction value designating the determined rotation amount to each robot servomotor.

System simulation device 1A can also calculate the behavior of the object corresponding to workpiece 232 and conveyor 230 that conveys workpiece 232 in the three-dimensional virtual space similarly to robot 30, and output the calculation result as instrument behavior data 2520.

Furthermore, in control system 2, the instruments are time-synchronized with each other. Specifically, the plurality of instruments connected to field network 22, namely, PLC 100, robot controller 310, servomotor driver 531, 532, and robot hand 210 include timers 90, 91, 92, 93, 94 time-synchronized with each other, respectively, and the instruments operate based on these timers, so that transmission and reception timing of the data including control commands are synchronized with each other.

(F1. Instrument behavior data (joint angle time-series data T(t)))

An example of a process of calculating the position and posture of robot 30 in the three-dimensional virtual space of the embodiment will be described. In the embodiment, an absolute coordinate system in which each unit such as robot 30 and PLC 200 commonly includes a coordinate system in the three-dimensional virtual space will be exemplified. When the position in the absolute coordinate system is calculated, in the embodiment, the rotation amount of servomotor 1301 is indicated by $\alpha$A, the rotation amount of servomotor 1302 is indicated by $\alpha$B, the rotation amount of servomotor 1303 is indicated by $\alpha$C, and the rotation amount of servomotor 1304 is indicated by $\alpha$D. Each servomotor

rotation amount ($\alpha$A, $\alpha$B, $\alpha$C, $\alpha$D) can be converted into the position (three-dimensional coordinates P(x, y, z)) of the joint in the three-dimensional virtual space by performing the arithmetic operation using a predetermined function with respect to each servomotor rotation amount ($\alpha$A, $\alpha$B, $\alpha$C, $\alpha$D). In system simulation device 1A of the embodiment, instrument behavior generation module 151 calculates the change in the time series of the behavior (the position in the three-dimensional virtual space) of the first target disposed in the three-dimensional virtual space corresponding to the instrument (more particularly, arm 301 of robot 30), and outputs the joint angle time-series data T(t) as instrument behavior data 2520 that is the calculation result.

(F2. Method for generating joint angle time-series data T(t))

Joint angle time-series data T(t) may be generated using computer-aided design CAD) regardless of the time-series change in the rotation amount of the servo motor described above. More specifically, in the case where instrument behavior generation module 151 includes a CAD module, when the user designates a predetermined motion (behavior) to be taken by the arm of robot 30, motion planning is executed for the designated motion by the CAD module, and joint angle time-series data T(t) is acquired as the calculation result of the motion planning. In the following, as the predetermined motion, pick-and-place often used as an industrial robot application will be exemplified. However, the type of motion is not limited to the pick-and-place.

<G. Model of simulation target>

Fig. 6 is a view schematically illustrating an example of the model of the robot arm to which the cable and the guide are attached. In the embodiment, an N-link robot arm having N links in Fig. 6 is used as the model of the simulation target. The model in Fig. 6 has joints $\theta_1$, $\theta_2$, $\theta_3$ ••• $\theta_N$ in the direction from the base of the arm to the end effector (robot hand 210) at the tip end. The arm further includes a link $L_0$ connecting an origin (the base of the arm) of an absolute coordinate system $\Sigma_{L0}$ and joint $\theta_1$, a link $L_1$ connecting joint $\theta_1$ and joint $\theta_2$, a links $L_2$ connecting joint $\theta_2$ and joint $\theta_3$, •••, and N links $L_N$ connecting joint $\theta_{N-1}$ and the joint $\theta_N$. The link corresponds to the axis connecting the joints. The model further includes a guide $G_n$ ($1 \leq n \leq N$) installed for the link $L_n$ ($1 \leq n \leq N$) and a partial cable $C_n$ (n = 1, 2, •••, N-1) tensioned and attached between adjacent guide $G_n$ and guide $G_{(n+1)}$.

In the model, absolute coordinate system $\Sigma L_0$ having the root of link $L_0$ as the origin and a coordinate system $\Sigma L_n$ rotating together with link $L_n$ at the root (the end on the origin side of link $L_n$) of link $L_n$ are introduced. In the model, coordinate system $\Sigma L_n$, is represented by a nonlinear function of a joint angle $\theta(t) = [\theta_1(t), \theta_2(t), \cdots, \theta_{N-1}(t)]^T$ at time t. In Fig. 6, a black circle on link $L_n$ represents an attachment position. The attachment position corresponds to the position and the posture of a screw hole prepared previously in the arm of actual robot 30 assuming the installation position of the guide and the sensor. In the model, the position and posture of guide $G_n$ in coordinate system $\Sigma L_n$ are given by a relative position and posture $P_n$ with respect to the attachment position. In order to simplify the description, hereinafter, position and posture $P_n$ is referred to as a position and posture Pn of guide $G_n$. The position and posture of guide $G_n$ in absolute coordinate system $\Sigma L_0$ of the model can be treated as a function of joint angle $\theta_n(t)$ ($1 \leq n \leq N$) and position and posture $P_n$ ($1 \leq n \leq N$).

(G1. Model of partial cable)

Fig. 7 is a view schematically illustrating the model of the partial cable for the simulation. In the simulation of the embodiment, a model representing the partial cable shape is generated, and the physical simulation is performed using the generated model. In the embodiment, the model of the partial cable includes a plurality of segments configuring the cable and a joint connecting the segments. The segment of the model is treated as the rigid body in the physical simulation, and the joint acts as the constraint condition on the behavior of the segment on both sides. That is, in the simulation, when the behavior of the segment is calculated, the force and the torque in Equation (1) proportional to a difference between the relative position and posture of the adjacent segment and the initial relative position and posture are applied to the component of the behavior according to a Hook's law. A method for calculating the spring coefficient in Equation (1) will be described later.
[Mathematical formula 1]

$$\begin{bmatrix} F_x \\ F_y \\ F_z \\ \tau_\varphi \\ \tau_\theta \\ \tau_\psi \end{bmatrix} = \mathrm{diag}(\kappa_x, \kappa_y, \kappa_z, \kappa_\varphi, \kappa_\theta, \kappa_\psi) \begin{bmatrix} \tilde{x} - x \\ \tilde{y} - y \\ \tilde{z} - z \\ \tilde{\varphi} - \varphi \\ \tilde{\theta} - \theta \\ \tilde{\psi} - \psi \end{bmatrix} + \mathrm{diag}(\zeta_x, \zeta_y, \zeta_z, \zeta_\varphi, \zeta_\theta, \zeta_\psi) \begin{bmatrix} \dot{x} \\ \dot{y} \\ \dot{z} \\ \dot{\varphi} \\ \dot{\theta} \\ \dot{\psi} \end{bmatrix} \quad \text{Equation (1)}$$

In Equation (1), the force ($F_x$, $F_y$, $F_z$) and the torque ($\tau_\varphi$, $\tau_\theta$, $\tau_\psi$) are illustrated. A first term on the right side is a proportional term of the hook, $\kappa_x$, $\kappa_y$, $\kappa_z$, $\kappa_\varphi$, $\kappa_\theta$, $\kappa_\psi$ represents the spring coefficient, $\tilde{x}$, $\tilde{y}$, $\tilde{z}$, $\tilde{\varphi}$, $\tilde{\theta}$, $\tilde{\psi}$ represents the initial relative position of the adjacent segment, represents the current relative position ($x$, $y$, $z$) and posture ($\varphi$, $\theta$, $\psi$). The second term is a damping term, $\zeta_x$, $\zeta_y$, $\zeta_z$, $\zeta_\varphi$, $\zeta_\theta$, $\zeta_\psi$ represents a damping coefficient, and a dot operator at the upper part of the relative position and posture represents a first derivative with respect to time.

The model of partial cable $C_n$ in Fig. 7 is configured of a total of $S_n$ segments Seg of the same length and joints (not illustrated) connecting segments Seg in a row. In the model, the first segment is fixed to position and posture $P_n$ of guide $G_n$, and the $S_n$-th segment Seg is connected to the first segment Seg of partial cable $C_{(n+1)}$ through the $S_n$-th joint. Accordingly, according to the model of partial cable $C_n$, the shape of partial cable $C_n$ is given by calculating the positions and postures of the $S_n$ segments. More specifically, because the coupling between segments Seg is limited to the vicinity, the constraint equation in Equation (1) is configured as a sparse determinant. Accordingly, in the simulation, a convergence solution is derived using an iterative method such as the Gauss-Seidel method. As position and posture $P_n$ of guide $G_n$ and position and posture $P_{(n+1)}$ of guide $G_{(n+1)}$ that are calculated with the lapse of time t change by the simulation, the shape (behavior) of partial cable $C_n$ also changes.

<H. Calculation of specific model and behavior of physical simulation>

With reference to Figs. 8, 9, and 10, a specific example of the physical simulation using the model of the partial cable will be described.

(H1. Specific model of physical simulation of partial cable)

Fig. 8 is a view schematically illustrating an example of the physical simulation model of the cable of the embodiment.

Cable simulator 165 of the embodiment includes the physical simulator that executes the physical simulation. The object (second target) corresponding to the partial cable that is the target of the physical simulation includes the rigid link modeled by connecting a plurality of rigid bodies 304 by joining rigid bodies 304 that are adjacent segments with joint 305. Specifically, in the simulation, rigid body 304 is treated as the segment having a predetermined size and shape, and in the rigid link, rigid bodies 304 are connected in a line by joint 305. Physical simulation parameters 124 include parameters such as the size and shape of the segment.

For example, rigid body 304 is a non-deformable object having a columnar shape. In the physical simulation, focusing on the center of rigid body 304, rigid body 304 is defined as a mass point having the current position and the immediately preceding position of the center. For example, joint 305 corresponds to a joint such as a spring or a damper, and joint 305 corresponds to the constraint condition described above that is a constraint on the translation and rotation of adjacent rigid bodies 304 in the x, y, and z axial directions in the model. Fig. 8 illustrates the state in which both ends of the row of rigid bodies 304 are attached to surface 306 of the arm of robot 30 by object 302 corresponding to guide 350 of the cable. As described above, in the cable simulation, the rigid link is modeled by the joint structure in which the constraint condition is added to the relationship between the adjacent rigid bodies with respect to the position and posture of rigid body 304. In Fig. 8, the rigid link includes three rigid bodies 304. However, the number of rigid bodies 304 is not limited to three. That is, the number of rigid bodies 304 is set according to the cable length (cable length in Fig. 23) designated by the parameter set.

In the cable simulation, partial cable behavior calculation module 166 includes the physical simulator. The physical simulator calculates the behavior (cable behavior data 2521) of the rigid link model in the three-dimensional virtual space by performing the arithmetic operation of a constraint equation including the constraint condition representing the rigid link model in Fig. 8 using the parameter set based on the given behavior (joint angle time-series data T(t)) of the object in the three-dimensional virtual space corresponding to robot 30.

Fig. 9 is a view illustrating an example of simultaneous equations 147 of the physical simulation model of the cable in Fig. 8. Simultaneous equations 147 include equations Ati, Bti, and Cti corresponding to rigid bodies 304 in Fig. 8. Each equation of simultaneous equations 147 includes variables of the positions (coordinates of x-axis, y-axis, and z-axis) and the postures (inclination $\psi$ (roll), $\theta$ (pitch), and $\varphi$ (yaw) of x-axis, y-axis, and z-axis) of rigid body 304, and the values of these variables are calculated by solving the simultaneous equations (equation 147). That is, cable simulator 165 repeatedly solves the simultaneous equations (equations 147) for each time step ti using parameter 139 based on joint angle time-series data T(t). Thus, the value of the variable corresponding to the position and posture of each rigid body 304 can be calculated for each time step ti.

(H2. Position update according to constraint condition)

Partial cable behavior calculation module 166 includes the physical simulator. More specifically, in the cable simulation, the position of rigid body 304 is updated (corrected) according to the position based dynamics (PBD) of the position base. Fig. 10 is a view schematically illustrating update of a position of physical simulation of the embodiment. With reference to Fig. 10, the processing for updating the position of rigid body 304 performed in the cable simulation will be described.

Specifically, in the cable simulation, the behavior of each rigid body 304 is calculated for each time step ti. As a result of the simulation, when adjacent rigid bodies 304 collide with each other, sometimes one of colliding rigid bodies 304 enters (sink into) the other (a part (A) in Fig. 10). Cable simulator 165 detects whether rigid body 304 enters another rigid body 304 (the part (A) in Fig. 10).

In the part (A) in Fig. 10, cable simulator 165 calculates a predicted position Xpredict (Xpredict = x0 + v $\times$ $\Delta$t, where x0 = calculated position, $\Delta$t = time at time step ti, v = speed) using calculated position x0 in the three-dimensional virtual space between the objects (rigid bodies 304) at each time step ti, and detects the presence or absence of the collision between the objects based on the relationship between predicted positions Xpredict between the objects. For example, the collision includes that a distance between both the position (coordinates) of the object and the position (coordinates) of another object in the three-dimensional virtual space is less than or equal to the threshold. The threshold may be a value based on the size (width, height, and the like) of the object. The collision detection method is not limited thereto.

When the intrusion is detected in the part (A) in Fig. 10, cable simulator 165 changes the positions (positions: Xpredict) of collided rigid bodies 304 such that the intrusion can be resolved (a part (B) in Fig. 10). At this point, when position X0 (position: Xpredict) of certain rigid body 304 is changed to position X (position after correction: Xcorrect), there is a possibility that the position of another rigid body 304 adjacent to rigid body 304 is shifted due to the change. Then, when the position change is repeated, the behavior of each rigid body 304 becomes stable in the cable simulation. In the embodiment, the constraint condition described above corresponds to a physical constraint parameter shifting the behavior of the object to the stable state.

When the position of rigid body 304 is changed by cable simulator 165, namely, when position X (position after correction: Xcorrect) of rigid body 304 is calculated, a speed v is changed (a part (C) in Fig. 10). Specifically, cable simulator 165 calculates changed speed Vcorrect according to Vcorrect = (X - X0)/$\Delta$t, and calculated speed Vcorrect is set to speed v for next time step ti (a speed vt in the part (A) in Fig. 10).

Although the position update of the x-coordinate of rigid body 304 is described above, in the cable simulation, the y-coordinate position and the z-coordinate position are also updated similarly to the update of the x-coordinate position.

In this manner, the behavior of the rigid link is calculated by repeatedly performing the operation according to the equation (Equation 147 and Equation (1)) representing the relationship between the positions and postures of the adjacent rigid bodies in the rigid link modeling partial cable $C_n$ and the constraint condition imposed on the relationship between the positions and postures of the rigid bodies, which is the condition corresponding to joint 305, based on joint angle time-series data T(t). In each time step ti of the simulation, the behavior of the rigid link can be calculated for the rigid link in the state where rigid body 304 does not invade (in the state where the sinking is eliminated).

In the cable simulation of the embodiment, a parameter representing hardness of cable 340 can be included as the parameter regarding the constraint condition of Equation (1) shifting the behavior of partial cable $C_n$ to the stable state. For example, the hardness parameters include parameters stiffness and damping specific to the material of cable 340. The parameter stiffness indicates uneasiness of deformation of rigid body 304, and for example, is equivalent to Young's modulus. In addition, the parameter damping indicates damping property with respect to vibration of rigid body 304.

<I. Partial cable optimization>

Partial cable optimization processing of the embodiment will be described. Cable simulator 165 optimizes the partial cable path for partial cable $C_n$ by partial cable behavior calculation module 166. The optimization of the partial cable path corresponds to the optimization of the installation parameter set of partial cable $C_n$. The attachment parameter set of partial cable $C_n$ includes three parameters of the number of segments $S_n$ configuring partial cable $C_n$, position and posture $P_n$ of guide $G_n$, and position and posture $P_{(n+1)}$ of guide $G_{(n+1)}$.

Cable simulator 165 performs optimization of the partial cable path using all types of candidate parameter sets including parameter candidates. More specifically, a cable shape model is produced based on the physical parameters, and a model of the cable initial shape corresponding to the robot arm shape is generated from the cable shape model based on one candidate parameter set and initial joint angle data T(0) corresponding to t = 0 of joint angle time-series data T(t). Subsequently, cable simulator 165 calculates cable behavior data 2521 indicating the cable shape corresponding to joint angle time series T(t) by the physical simulation with the lapse of time t based on the generated model. Cable simulator 165 determines whether the candidate parameter set used for the simulation satisfies the following constraints from the calculated time-series cable shape. The candidate parameter set determined to satisfy the constraint is held as the optimal parameter set of partial cable $C_n$.

(I1. Calculation of load)

Load calculation module 167 calculates load information 142 indicating the load applied to the rigid link (second target) of partial cable $C_n$ based on cable behavior data 2521. In the embodiment, the types of loads that can be calculated include bending, elongation, twisting, impact, and repulsive force, but are not limited thereto.

Load calculation module 167 calculates the load applied to rigid body 304, namely, each position 1411 according to a predetermined arithmetic operation based on the behavior (position and posture) of each rigid body 304. For example, the twisting and bending of each rigid body 304 are calculated from the behavior of rigid body 304 and adjacent rigid body 304, the elongation is calculated from the distance between adjacent rigid bodies 304 (the larger the distance, the more pulled the distance), and the repulsive force is calculated from the distance that the rigid body invades during collision (the larger the distance, the larger the repulsive force). The impact calculated by load calculation module 167 may include the collision between rigid body 304 and another object different from rigid body 304. The another object include objects such as peripheral instrument, robots 30 with arms 301, and workpieces 232. Load calculation module 167 detects the collision between rigid body 304 and another object. More specifically, load calculation module 167 detects the collision based on the relative positional relationship in the three-dimensional virtual space between the behavior (position and posture) of rigid body 304 of the cable indicated by cable behavior data 2521 and the behavior (position and posture) of another object indicated by instrument behavior data 2520. For example, load calculation module 167 detects the collision between rigid body 304 and the object of the arm 301 based on the relative positional relationship in the three-dimensional virtual space between the position and posture of rigid body 304 at time step ti indicated by cable behavior data 2521 and the position and posture of the arm indicated by joint angle time-series data T(t).

(I2. Constraints)

For example, the above constraint includes the following conditions indicating that the magnitude of the load applied to the rigid link of the partial cable $C_n$ does not exceed the threshold. Cable parameter 139 includes these thresholds as parameters.

Condition 1. The impact that the cable receives from contact with the robot arm or the peripheral instrument is less than or equal to the threshold (impulse_th).

Condition 2. The elongation of the distance with respect to the initial distance between the segments of the cable is less than or equal to the threshold (stretch_th).

Condition 3. The curvature radius of the cable does not fall below the threshold (curvature_th) determined by the material of the cable.

In the optimization of the parameter set of partial cable $C_n$, first, a set $D_{1,n}$ of candidate parameter sets generated from all combinations of the installation parameter candidates is formulated.

[Mathematical formula 2] The set $D_{1,n}$ of parameter set is formulated by Equations (2) and (3). First, a candidate set of the number of segments constituting the partial cable connecting a link $L_n$ and a link $L_{n+1}$ is expressed as $\{S_{n,in} | 1 \leq i_n \leq I_n\}$. At this point, $I_n$ is the number of candidates of the number of segments. Subsequently, a candidate set of the position and posture of the guide attached to a link $L_n$ is expressed as $[P_{n,jn} | 1 \leq j_n \leq J_n\}$. At this point, $J_n$ is the number of candidates for the position and posture of the guide. From these candidate sets, $D_{0,n}$ of Equation (2) is obtained.

$$D_{0,n} = \{(S_{n,i_n}, P_{n,j_n}, P_{n+1,j_{n+1}}) | 1 \leq i_n \leq I_n, 1 \leq j_n \leq J_n\}$$ Equation (2)

Set $D_{1,n}$ of the candidate parameter sets satisfying the condition 1, the condition 2, and the condition 3 described above is expressed by Equation (3).
[Mathematical formula 3]

$$D_{1,n} = \{(S_{n,i_n}, P_{n,j_n}, P_{n+1,j_{n+1}}) \in D_{0,n} | Impulse_{th} > \max_{1 \leq t \leq T} Impulse_{(S_{n,i_n}, P_{n,j_n}, P_{n+1,j_{n+1}})}(t),$$
$$Stretch_{th} > \max_{1 \leq t \leq T} Stretch_{(S_{n,i_n}, P_{n,j_n}, P_{n+1,j_{n+1}})}(t),$$
$$Curvature_{th} \leq \min_{1 \leq t \leq T} Curvature_{(S_{n,i_n}, P_{n,j_n}, P_{n+1,j_{n+1}})}(t)\}$$

Equation (3)

At this point, $Impulse_{(S_{n,i_n}, P_{n,j_n}, P_{n+1,j_{n+1}})}(t)$ represents the impact that the partial cable having the number of segments $S_{n,in}$ between the guide having the position and posture $P_{n,jn}$ installed on the link $L_n$ and the guide having the position and posture $P_{n+1,jn+1}$ installed on the link $L_{n+1}$ receives in contact with the robot arm or the peripheral instrument in time $t$. Similarly, $Stretch_{(S_{n,i_n}, P_{n,j_n}, P_{n+1,j_{n+1}})}(t)$ and $Curvature_{(S_{n,i_n}, P_{n,j_n}, P_{n+1,j_{n+1}})}(t)$ represent the elongation or the radius of curvature, respectively.

At this point, the set of parameter sets of set $D_{1,n}$ is not set as the set of the optimal parameter sets of partial cable $C_n$ as it is, but in the embodiment, the parameter set of each partial cable $C_n$ is further optimized based on the fact of robustness.

This is because, in the case where the cable is attached according to the parameter set of the parameter set of set $D_{1,n}$, there is a possibility that the parameter set that may cause a failure during operation of robot 30 is included in set $D_{1,n}$ due to a modeling error of the cable, an error of the physical simulation, and an attachment error during the attaching of the cable. In particular, the cable wiring has a large variation in the attachment error due to a user's skill level, and there may be the case where the cable is not attached just as the optimal parameter set of sets $D_{1,n}$.

In order to prevent the generation of the above case, cable simulator 165 applies the robustness condition to set $D_{1,n}$ to determine the optimal parameter set for partial cable $C_n$. In the embodiment, the robustness indicates whether the parameter set to be optimized is susceptible to the above error. The parameter set that is less sensitive to the error has the robustness, but the parameter set that is sensitive to the error does not have the robustness.

In the embodiment, attention is paid to the robustness of the number of segments $S_n$ of partial cable $C_n$. More specifically, even when the number of segments $S_n$ increases or decreases within a certain range $\pm R$, it is imposed that the constraint of Equation (3) described above is satisfied. That is, among sets $D_{1,n}$, even when the number of segments $S_n$ increases or decreases within the certain range $\pm R$, a subset of the parameter set satisfying the conditions 1 to 3 is set $D_{2,n}$ of the optimal parameter sets having the robustness. Set $D_{2,n}$ of the optimal parameter sets is expressed by the following Equation (4). Cable parameter 139 includes a parameter of range R.
[Mathematical formula 4]

$$D_{2,n} = \{(S_{n,i_n}, P_{n,j_n}, P_{n+1,j_{n+1}}) | \ \{(S_{n,i'_n}, P_{n,j_n}, P_{n+1,j_{n+1}}) | S_{n,i_n} - R \leq S_{n,i'_n} \leq S_{n,i_n} + R, 1 \leq i'_n \leq I_n | \} \subset D_{1,n}\}$$

Equation (4)

Cable simulator 165 performs the above processing (simulation) for each partial cable $C_n$. Thus, set $D_{1,n}$ and set $D_{2,n}$ of the optimal parameter sets are calculated for each partial cable $C_n$.

<J. Entire cable optimization>

Cable simulator 165 derives the parameter set such that the number of segments of the entire cable 340 is minimized such that the cable length of entire cable 340 is minimized, namely, the number of segments of the entire cable 340 is minimized, based on set $D_{2,n}$ of the optimal parameter sets of each partial cable $C_n$ obtained by the partial cable optimization. Thus, the optimization parameter set for attaching entire cable 340 is determined.

More specifically, cable simulator 165 derives at least one parameter set satisfying the sharing condition among the parameter sets of set $D_{2,n}$ of adjacent partial cables $C_n$. In the embodiment, the sharing condition includes a condition that adjacent partial cables $C_n$ are relayed between both partial cables, namely, position and posture $P_n(P_{(n+1)})$ of guide $G_n(G_{(n+1)})$ shared by both partial cables is common. Cable simulator 165 extracts at least one parameter set satisfying this sharing condition from set $D_{2,n}$ of the optimal parameter sets of each partial cable $C_n$, and determines a parameter set set $D_{3,n}$ of entire cable 340 including the at least one parameter set extracted for each partial cable $C_n$.

More specifically, parameter decision module 170 collates the parameter set of each partial cable set $D_{2,n}$ for each set of adjacent (adjacent) partial cables $C_n$ and $C_{(n+1)}$. As a result of the collation, parameter decision module 170 extracts (determines) at least one optimal parameter set from set $D_{2,n}$ of partial cables $C_n$ and set $D_{2,n}$ of partial cables $C_{(n+1)}$ such that position and posture $P_n$ of guide $G_n$ relaying between both the partial cables of the set satisfies the condition of being shared (common) by both the partial cables. The above-described relaying guide indicates guide $G_2$, for example, in the pair of adjacent partial cables $C_1$ and $C_2$ in Fig. 6.

The at least one optimal parameter set is extracted by parameter decision module 170 from set $D_{2,n}$ of partial cables $C_n$ based on the sharing condition according to the procedure described above, and extracted set $D_3$ including the optimum parameters of partial cables $C_n$ is expressed by Equation (5).

[Mathematical formula 5]

$$D_3 = \{(S_{1,i_1},\dots,S_{n,i_n},\dots,S_{N-1,i_{N-1}},P_{1,j_1},\dots,P_{n,j_n},\dots,P_{N,j_N}) \mid (S_{n,i_n},P_{n,j_n},P_{n+1,j_{n+1}}) \in D_{2,n}, 1 \le n \le N\}$$

Equation (5)

The at least one optimal parameter set of each partial cable $C_n$ indicated by set $D_3$ is the parameter set that satisfies the constraint (impact, elongation, radius of curvature) and a sharing condition, and is also referred to as an implementable parameter set.

Parameter decision module 170 finally determines, for each partial cable $C_n$, the parameter set that minimizes the number of segments constituting entire cable 340, namely, minimizes the total value of the number of segments $S_n$ of partial cables $C_n$, among the at least one parameter set of set $D_3$, and sets the determined parameter set of each partial cable $C_n$ as the optimal parameter set d* in Equation (6).

[Mathematical formula 6]

$$d^* = \underset{d}{\arg} \min_{d \in D_3} \sum_{n=1}^{N-1} S_{n,i_n}$$

Equation (6)

When a plurality of optimal parameter sets d* in which the sum of the number of segments constituting entire cable 340 is matched are calculated, one optimal parameter set d* is selected from the plurality of optimal parameter sets d* by parameter decision module 170 based on the impact, the elongation percentage between the segments, and the bending radius received by the segments of all partial cables $C_n$.

<K. Schematic processing flow of simulation>

Fig. 11 is a view schematically illustrating an example of a simulation sequence of the embodiment. In Fig. 11, the cable simulation processing performed by cable simulation device 1B is illustrated in association with the peripheral processing. For the sake of explanation, instrument behavior data 2520 used by the following cable simulation indicates joint angle time-series data T(t).

Referring to Fig. 11, the user operates operation unit 106 to input the instruction to set the system simulation and the instruction to add the cable simulation to information processing device 100 (step S80, step S83). For example, processor 102 sets various parameters for the system simulation according to the instruction from the user such that the system simulation can be executed. In addition, processor 102 sets the state in which the cable simulation can be executed according to the instruction to add the cable simulation. For example, cable simulator 165 is set such that instrument behavior data 2520 (joint angle time-series data T(t)) can be referred to.

The user operates operation unit 106 and inputs the instruction to execute the system simulation and store instrument behavior data 2520 to information processing device 100 (step S85).

Processor 102 activates system simulation device 1A (step S87), executes the system simulation, stores (holds) instrument behavior data 2520 that is the execution result of in storage 111 (step S88), and outputs the notification indicating that the storage of instrument behavior data 2520 is completed to, for example, display 109 (step S89).

The user operates operation unit 106 to input cable parameter 139 to information processing device 100 (step S91). Parameter setting program 145 executed by processor 102 stores cable parameter 139 received from operation unit 106 in storage 111.

The user operates operation unit 106 and inputs the instruction to start the execution of the cable simulation to information processing device 100 (step S93). Processor 102 activates cable simulator 165 according to the instruction to start the execution of the cable simulation.

When activated, cable simulator 165 performs the cable simulation (step S100). More specifically, the simulation is repeated (loop processing) while changing time t for each partial cable for the partial cable optimization, and the entire cable optimization processing is performed based on the optimal parameter set calculated for each partial cable.

Evaluation module 177 executes evaluation processing of the cable simulation result (step S130). Evaluation module 177 outputs information about evaluation data 144 that is the evaluation result (step S140). For example, the image based on evaluation data 144 is displayed on display 109.

(K1. Schematic processing flow of cable simulation)

Fig. 12 is a processing flowchart illustrating the cable simulation (step S100) in Fig. 11. Referring to Fig. 12, when the user designates a predetermined motion (pick and place) from operation unit 106, joint angle time-series data T(t) corresponding to instrument behavior data 2520 is calculated by the motion planning of instrument behavior generation module 151 of cable simulator 165 (step S88a).

Cable simulator 165 performs the partial cable optimization processing for each of the n partial cables (step S110), calculates set $D_{2,n}$ (n = 1, 2, 3 •••) of the parameter sets including at least one optimal parameter set for each partial cable $C_n$, and calculates optimized parameter set d* of entire cable 340 based on calculated set $D_{2,n}$ of the optimal parameter sets of each partial cable $C_n$ (step S120). Optimal parameter set d* corresponds to an implementable parameter set that enables the attachment of the cable to robot 30.

(K2. Processing flow of partial cable optimization)

Fig. 13 is a processing flowchart illustrating the partial cable optimization processing (step S110) in Fig. 12. With reference to Fig. 13, processing for calculating optimal parameter sets $D_{2,n}$ of the certain partial cable $C_n$ will be described. Set $D_{2,n}$ of the optimal parameter sets of another partial cable is calculated by performing similar processing on the another partial cable. Here, cable parameter 139 includes a plurality of candidate parameter sets set by the user.

First, the first candidate parameter set of cable parameter 139 is set as the simulation target parameter set, and joint angle time-series data T(t) is set (step S111). Partial cable behavior calculation module 166 generates the model of the initial shape of partial cable $C_n$ using the target parameter set, the size of the segment of physical simulation parameter 124, the shape model of the robot arm, and the like (step S112). For example, the model of partial cable $C_n$ is indicated by the model of the rigid link in Fig. 8 and Equation 147 in Fig. 9.

The behavior (shape change) of the cable accompanying the behavior of arm 301 of robot 30 is calculated from the model of the initial shape of partial cable $C_n$ (step S113). That is, partial cable behavior calculation module 166 repeatedly solves the simultaneous equations (Equation 147) for each time step ti based on joint angle time-series data T(t), thereby calculating the value of variable $P_n$ corresponding to the position and posture of each rigid body 304 for each time step ti, namely, the behavior.

It is determined whether the behavior of the partial cable satisfies the constraint based on position and posture $P_n$ that changes in time series calculated for the partial cable (step S114). More specifically, load calculation module 167 calculates the load applied to the rigid link that is the model of the partial cable, and constraint determination module 168 determines whether the behavior of the partial cable satisfies the constraint using the threshold of the constraint of cable parameter 139 based on the load (step S115).

When it is determined that the constraint is not satisfied (NO in step S115), it is determined whether the optimization of the parameter set of the partial cable is completed, namely, whether the partial cable optimization processing is performed using all the candidate parameter sets of cable parameter 139 (step S19). When it is determined that the optimization of the parameter set of the partial cable is ended (YES in step S119), the processing in Fig. 8 is ended.

However, when it is determined that the optimization of the parameter set of the partial cable is not ended (NO in step S119), the processing returns to step S111. In step S111, the next candidate parameter set of cable parameter 139 is set as the simulation target parameter set, and the processing in and after step S112 is repeated for the target parameter set in the same manner as described above.

On the other hand, when it is determined that the constraint is satisfied (YES in step S115), robustness determination module 169 determines whether the behavior of the partial cable satisfies the condition of robustness using range R of cable parameters 139 (step S116).

When it is determined that the condition of robustness is not satisfied (NO in step S1 17), the processing proceeds to step S119. However, when it is determined that the condition of robustness is satisfied (YES in step S117), cable simulator 165 registers the target parameter set as the optimal parameter set of partial cable $C_n$ (step S1 18). That is, cable simulator 165 includes the target parameter set in the set $D_{2,n}$ of partial cables $C_n$.

When the processing in Fig. 13 is performed for each partial cable, Set $D_{2,n}$ including at least one optimal parameter set is calculated for each partial cable $C_n$.

(K3. Processing flow of entire cable optimization)

Fig. 14 is a processing flowchart illustrating entire cable optimization processing (step S120) in Fig. 12. With reference to Fig. 14, a procedure for calculating optimal parameter set d* will be described.

Parameter decision module 170 compares the value of position and posture $P_n$ of each parameter set between set $D_{2,n}$ of partial cables $C_n$ and set $D_{2,n}$ of partial cables $C_{(n+1)}$ adjacent to partial cable $C_n$, and determines the parameter set having position and posture $P_n$ satisfying the adjacent condition based on the comparison result. At least one combination of the parameter sets satisfying the adjacent condition determined in set $D_{2,n}$ of partial cables $C_n$ is acquired.

Parameter decision module 170 sets a first one of the one combination as the target combination (step S121), calculates the sum of the number of segments $S_n$ of the partial cables included in the target combination (step S122), and determines whether the entire cable length indicated by the calculated sum is the shortest among the entire cable lengths of all combinations (step S123).

When it is not determined that the calculated total value of the number of segments $S_n$ indicates the shortest cable length (NO in step S124), it is determined whether the processing in Fig. 14 is performed for all the combinations of the parameter sets satisfying the adjacent condition (step S126). When it is determined that the processing in Fig. 14 is performed for all the combinations (YES in step S126), the processing ends. On the other hand, when it is determined that the processing in Fig. 14 is not performed for all the combinations (NO in step S126), the processing returns to step S122, the next combination is set as the target combination, and the processing in and after step S122 is performed for the target combination in the same manner as described above.

On the other hand, when it is determined that the total value of the number of segments $S_n$ calculated for the target combination indicates the shortest cable length (YES in step S124), the parameter set (number of segments $S_n$ of each partial cable, position and posture $P_n$ of each guide) indicated by the target combination is determined as optimal parameter set d* of entire cable 340, namely, the mountable parameter set (step S125).

<L. Specific example of cable simulation>

A specific example of the cable simulation will be described in the case where the cable is attached to the arm of a six-axis vertical articulated robot. Here, the case where the cable of a product number AWG28x5PIFVV-SB manufactured by Fujikura Co., Ltd. is attached to the arm of the robot of a model number Viper850 manufactured by OMRON Corporation will be described.

First, the disposition of the guide and the cable will be described, and then three pieces of processing of joint angle time-series generation, partial cable optimization, and entire cable optimization will be described according to the processing procedure in Fig. 12. Assuming a plurality of motions, the simulation optimizes the cable path for each motion.

(L1. Disposition example of guide and cable)

Fig. 15 is a view illustrating a number of segments to be optimized and the position and posture of the guide in the robot arm. The absolute coordinate system $\Sigma_{L0}$ is defined at the base of the robot arm. In addition, coordinate systems in which instrument attachment positions at links $L_3$ and $L_4$ as the origin are defined as $\Sigma_{L3}$ and $\Sigma_{L4}$. Because the end effector (robot hand 210) is attached to link $L_6$, guide $G_6$ is replaced with a cable insertion port attached to the end effector. That is, a position and posture $P_6$ of guide $G_6$ is fixed. Due to the structure of the robot arm, guide $G_n$ cannot be installed on link $L_5$. For this reason, partial cable $C_4$ is connected between guide $G_4$ and guide $G_6$ of link $L_4$, and the parameters to be optimized for partial cable $C_4$ are the number of segments $S_4$ and a guide position and posture $P_4$. In addition, partial cable $C_3$ is connected between guide $G_3$ and guide $G_4$ of link $L_3$, and the parameters to be optimized for partial cable $C_3$ are the number of segments $S_3$ and guide positions and postures $P_3$ and $P_4$. Furthermore, although there may be the case where guides $G_2$ and $G_3$ (not illustrated) of link $L_2$ are connected by a partial cable $C_2$ (not illustrated), the parameters of partial cable $C_2$ are not targeted for optimization because cables from a stand or a ceiling are generally connected to guide $G_3$.

Hereinafter, the cable path optimization will be described for partial cables $C_3$ and $C_4$ that connect guide $G_3$ and guide $G_6$ through guide $G_4$ in Fig. 15. That is, as described above, guide $G_5$ is not used. In addition, position and posture $P_6$ of guide $G_6$ are uniquely determined by the specification of the end effector. Accordingly, the parameters to be optimized are the numbers of segments $S_3$ and $S_4$ of partial cables $C_3$ and $C_4$ and guide positions and postures $P_3$ and $P_4$. The partial cables to be simulated are not limited to partial cables $C_3$ and $C_4$.

(L2. Specific example of joint angle time-series generation)

With reference to Figs. 15 and 16, the generation of joint angle time-series data T(t) by motion planning will be described. Fig. 16 is a view schematically illustrating an example of pick-and-place motion of the robot arm. In the case where the user designates the pick and place as the predetermined motion, the predetermined motion includes a series of movements in which the robot arm picks the object (the object corresponds to workpiece 232) disposed in front of the robot arm, and places the object at a predetermined angle $\theta$ in a place separated by, for example, 300 mm in the X-axis direction and 300 mm in the Y-axis direction of absolute coordinate system $\Sigma_{L0}$ in Fig. 15. The user sets seven types of angles $\theta$ in increments of 15° from -45° to 45° around the Z-axis based on coordinate $\Sigma_{L0}$. Thus, the user can designate seven types of pick-and-place motions corresponding to angle $\theta$ as the pick-and-place motion. Each of the seven types of motion is referred to as motion $\theta$. At this point, the angle parallel to the X-axis of absolute coordinate system $\Sigma_{L0}$ is set to 90°. Each of the seven types of motion starts from the initial pose illustrated in a part (a) in Fig. 16, transitions to the pick pose illustrated in a part (b) in Fig. 16, then transitions to place poses corresponding to any one of the seven types of angles $\theta$, and finally returns to initial pose in the part (a) in Fig. 16. In parts (c), (d), and (e) in Fig. 16, place poses of -45°, 0°, and 45° are exemplified as motion $\theta$. The motion planning is executed by instrument behavior generation module 151 according to time step ti for each of the seven types of pick and place motions designated by the user, and joint angle time-series data T(t) according to time step ti is calculated for each of the seven types of pick and place motions.

(L3. Specific example of partial cable optimization)

In the partial cable optimization, for example, for partial cables $C_3$ and $C_4$, the optimal parameter set including the numbers of segments $S_3$ and $S_4$ and positions and postures $P_3$ and $P_4$ of guides $G_3$ and $G_4$ is acquired using joint angle time-series data T(t). When acquiring the optimal parameter set, cable simulator 165 determines a search range of the parameter set.

In the embodiment, for the search range of the number of segments $S_3$, the minimum value is set based on an inter-guide distance, and the maximum value is set to about several times the inter-guide distance in order to avoid the contact between the cable and the robot arm. In the case where the search range of the number of segments $S_3$ is set in this manner, a range greater than or equal to 100 mm and less than or equal to 300 mm for cable $C_3$ and a range than or equal to 200 mm and less than or equal to 440 mm for cable $C_4$ are searched as the cable length. In the embodiment, because a unit segment length is set to 5 mm and a sampling interval of the number of segments Sn is set to 4, the candidates for the numbers of segments $S_3$ and $S_4$ are ($S_{3,1}$, $S_{3,2}$, •••, $S_{3,11}$) = (20, 24, ••, 60) and ($S_{4,1}$, $S_{4,2}$, •••, $S_{4,13}$) = (40, 44, ••, 88), respectively. The number of candidates of the optimal parameter of each of the number of segments $S_3$ and $S_4$ is $I_3$ = 11 and $I_4$ = 13.

As described above, the position (x, y, z) and the posture ($\varphi$, $\theta$, $\psi$) of $P_n$ are based on the instrument installation position in coordinate system $\Sigma_{Ln}$ of link $L_n$. A $\varphi$ direction of the posture is a cable twist direction. However, when the cable is attached to the robot while previously twisted, the life of the cable is shortened, so that $\varphi$ is fixed to zero in the embodiment. In the embodiment, a position candidate set that is a set of optimal parameters of position $P_3$ is set as {(x, y, z)| x = 0, y = -40, 0, 40, z = 0, 20}. In addition, from the reason described above, $J_3$ = 6 is set to be fixed at the posture ($\varphi$, $\theta$, $\psi$) = (0, 0, 0) at the position $P_3$. On the other hand, {(x, y, z)| x = 0, 50, y = -50, 0, 50, z = 0, 20} is set to the position candidate set that is the set of optimum parameters of position $P_4$. The posture candidate set that is the set of the optimum parameters of the position $P_4$ is set to {(($\varphi$, $\theta$, $\psi$)| $\varphi$ = 0, $\theta$ = 0, 45, $\psi$ = -90, 0, 90}. Accordingly, $J_4$ = 72. As described above, because position and posture $P_6$ of guide $G_6$ is fixed, $J_6$ = 1. At this point, the unit of the position is mm, and the unit of the posture is degree. There are 4752 combinations of the optimum parameters for cable $C_3$ and 936 combinations for cable $C_4$. In the simulation, the unit segment length is represented by a column and a void, the length of the column is set to 3.5 mm and the length of the void is set to 1.5 mm, and the diameter of the column representing the segment is set to 8 mm.

Cable simulator 165 calculates the optimal parameter set for each of partial cables $C_3$ and $C_4$. Here, as the constraints, zero is set to the impact threshold (impulse_th) of the cable, 102% is set to the threshold (stretch_th) of the elongation rate between the segments, and 48 mm is set to the threshold (curvature_th) of the curvature radius. For example, the threshold of the curvature radius is set based on six times the diameter that is a guarantee criterion of the cable. In the embodiment, for cable $C_3$, the physical simulation is performed using each of all the parameter sets included in set $D_{0,3}$ of the candidate parameter sets, and set $D_{1,3}$ of the candidate parameter sets that satisfy the three conditions of the conditions 1 to 3 as the constraint is calculated. For this set $D_{1,3}$, set $D_{2,3}$ of the optimal parameter sets of partial cable $C_3$, which is the set of the candidate parameter sets in which the number of segments with respect to the cable length satisfies the robustness condition under certain range R (for example, R = 8 mm), is calculated. For partial cable $C_4$, the physical simulation is performed using each of all the parameter sets included in set $D_{0,4}$ of the candidate parameter sets according to the procedure similar to that for partial cable $C_3$, set $D_{1,4}$ of the candidate parameter sets satisfying the constraint is calculated, and set $D_{2,4}$ of the optimal parameter sets satisfying the robustness condition is calculated from sets $D_{1,4}$.

(L4. Specific example of entire cable optimization)

Based on the result of the parameter set optimization of the partial cable, the parameter set optimization of entire cable 340 is performed. More specifically, cable simulator 165 calculates set $D_3$ of the implementable parameter sets satisfying the adjacency condition between partial cable $C_3$ and partial cable $C_4$ based on set $D_{2,3}$ and set $D_{2,4}$ of the optimal parameter sets of partial cables $C_3$ and $C_4$, and calculates optimal parameter set d* of entire cable 340 from calculated set $D_3$.

Fig. 17 is a graph illustrating a simulation result. The graph quantitatively illustrates a relationship between the plurality of motions and the number of implementable parameter sets. These may be generated and displayed by evaluation module 177. Fig. 18 is a view illustrating a relationship among each motion in Fig. 17, the optimal parameter set of entire cable 340, and the shape of the cable. A horizontal axis of the graph in Fig. 17 indicates the angle of the arm in the case where place pose (the posture during the place) is taken as the type of motion, and a vertical axis indicates the number of mountable parameter sets for each type of place pose (each angle of the arm in the case where the posture during the place is taken).

In Fig. 17, the number of the implementable parameter sets calculated in the motion of 45° at which the angle difference between link $L_3$ and link $L_4$ during place pose is 0° is 71, and the number of the implementable parameter sets decreases as the angle during place pose decreases. The number of implementable parameter sets is one in motion -60°, and the number of implementable parameter sets is zero in motion - 75°. As illustrated in Fig. 17, the cable path does not exist in the robot arm implementing motion -75°. In the embodiment, evaluation module 177 generates evaluation data 144 including the graph in Fig. 17 and outputs evaluation data 144 to display 109. From the simulation result in Fig. 15, the user of the production line can obtain the determination criterion whether the design of the production line including the motion of the robot arm, the disposition angle of workpiece 232, and the disposition of the peripheral instruments is required to be reviewed.

Fig. 18 illustrates implementable parameter set d* (that is, optimal parameter set d*) calculated for motion $\theta$ and the cable shapes during pick pose and place pose in association with each motion $\theta$ (= 45°, 0°, -45°). In the embodiment, evaluation module 177 generates evaluation data 144 including the association information in Fig. 18 and outputs evaluation data 144 to display 109. As illustrated in Fig. 18, in motion $\theta$ = 45°, because the angle difference between link $L_3$ and link $L_4$ is 0°, a left-right symmetric optimal parameter set, namely, cable attachment modes of right-to-left and left-to-right shapes exist. When the angle during place pose decreases, because link $L_4$ rotates counterclockwise with respect to link $L_3$, the cable attachment mode is limited to the left-to-right shape. As compared with motion $\theta$ = 0°, place pose of motion $\theta$ = -45° corresponds to the case where the rotation angle of link $L_4$ with respect to link $L_3$ increases. In this case, there is a possibility that the cable interferes (contact) with the robot arm, and the position of guide $G_4$ at motion $\theta$ = -45° moves to the upper right of guide $G_4$ at motion $\theta$ = 0° so as to be able to avoid the interference. This makes it possible to avoid a bend radius constraint during place pose of motion $\theta$ = -45°, and this implementable parameter set d* of motion $\theta$ = -45° has a larger number of segments Sn as compared with implementable parameter set d* of motion $\theta$ = 0°. For example, the cable length of partial cable $C_4$ is extended by 60 mm, and the cable length of partial cable $C_3$ is shortened by 40 mm, so that the extension of the cable length of entire cable 340 is only 20 mm.

The information illustrated in Fig. 17 can support the user such that the presence or absence of the cable path and the difficulty level of the cable attachment can be quantitatively determined based on the number of implementable parameter sets. In addition, according to the information in Fig. 18, the user can be supported such that the state in which the optimum values of the cable length and the guide position and posture change with the increase in the angle between links $L_3$ and $L_4$ during place pose can be analyzed based on implementable parameter set d*. The derivation of the optimal parameter set of each partial cable or the implementable parameter set of entire cable 340 and the analysis method indicated by the information in Fig. 17 or 18 for the derivation result can also be applied to cable path optimization for motion of the type different from the motion targeted in the embodiment.

<M. Setting of parameter set and UI screen>

The candidate parameter set including the number of segments and the position and posture of the guide for the cable simulation described above can be set by the user. Parameter setting program 145 provides a UI tool that assists the user for parameter set setting. Fig. 23 is a view schematically illustrating an example of a UI screen regarding parameter setting of the cable of the embodiment.

By the UI tool, the UI screen in Fig. 23 is displayed on display 109. On the right side of the UI screen, a 3D image of the arm of robot 30 to which cable 340 is attached is displayed together with an object image W of workpiece 232 by 3D visualizer 164. The 3D image is generated by processor 102 from CAD data or the like of instrument image data 2530.

The user can set the candidate parameter set as cable parameter 139 by operating the UI screen on the left side in Fig. 23. Each of the candidate parameter sets includes a parameter 191 including the length (cable Length) of entire cable 340 and a parameter 192 (or 193) including the position and posture and the partial cable length of each cable guide 350. In Fig. 23, for example, a set of parameters 191 and 192 and a set of parameters 191 and 193 are illustrated as two candidate parameter sets, but the number of candidate parameter sets is not limited to two. Parameter setting program 145 calculates position and posture $P_n$ of the absolute coordinates of each guide and the number of segments $S_n$ of the partial cable attached between the guides from parameter 192 (or 193) according to a predetermined calculation.

Furthermore, on the UI screen, the user can set a parameter 194 regarding the constraint and a parameter 195 specifying range R of the robustness. Parameter 194 includes the threshold (for example, 5) of the curvature radius and the display color of the 3D image in the case where the load calculated by the simulation exceeds each threshold value of the constraint. When the cable simulation is performed according to the parameter set set on the UI screen, and for example, when it is determined that the load (elongation, radius of curvature and impact) of a certain partial cable exceeds a predetermined threshold, the display color of the object image corresponding to the partial cable of the 3D image on the right side of the screen in Fig. 23 is changed to the color (for example, blue, red, or green) specified by parameter 194 by 3D visualizer 164 based on evaluation data 144. Accordingly, the magnitude of the load applied to the rigid link model of the partial cable is visually presented in the display color of the image of the cable displayed on display 109.

Fig. 24 is a view illustrating an example of the screen illustrating the implementable parameter set of the embodiment in a tabular format. The implementable parameter set calculated by cable simulator 165 is displayed on display 109 by evaluation module 177, for example, in the tabular form. In the table of Fig. 24, partial cable length 196 is indicated with the value within the range R of the robustness. When the user selects the parameter set on the UI screen in Fig. 24, the 3D image of the robot to which the cable and the guide are attached according to the selected parameter set is displayed by 3D visualizer 164. Virtual space information management module 150 generates virtual space information 105 representing the behavior of the arm of robot 30 and the cable attached to the arm according to the implementable parameter set based on instrument behavior data 2520 (that is, joint angle time-series data T(t)) and cable behavior data 2521. 3D visualizer 164 displays the 3D image according to generated virtual space information 105 on display 109.

<N. Method for calculating spring constant>

In the embodiment, for example, the spring constant of Equation (1) is estimated using Scan2Flex proposed by Hermansson et al., but the estimation method is not limited to the method using Scan2Flex. With reference to Figs. 19 and 20, a method for estimating (calculating) a bending spring constant $k\theta$ among the spring constants will be described. Fig. 19 is a view schematically illustrating the method for estimating the spring constant. Fig. 20 is a view illustrating measured vertical displacement with respect to each cable length in a part (a) in Fig. 19 in the tabular form. In the estimation of the spring constant, the bending spring constant around the joint is calculated based on the cable shape change due to gravity. For the estimation, as illustrated in the part (a) in Fig. 19, one end point of the cable of the actual machine is horizontally fixed, and the vertical displacement of the tip portion is measured while the cable length is changed from 100 mm to 200 mm at intervals of 20 mm. The measured vertical displacement for each cable length is plotted in Fig. 20. In the estimation, as illustrated in a part (b) in Fig. 19, the cable model having a length similar to that in the part (a) in Fig. 19 is produced by the simulation, and one end point of the cable model is horizontally fixed. The segment mass configuring the cable model is set such that the entire cable mass is matched, and a bending spring constant (swing stiffness) implementing the vertical displacement measured for each cable length is calculated by giving acceleration -9.8 [$m/s^2$] in the vertical direction as the gravity. The calculation results are illustrated at the bottom of the table in Fig. 20. Bending spring constant $k\theta$ is set to 70.5 from the average value of the calculated values.

With reference to Figs. 21 and 22, a method for calculating a torsion spring constant will be described below. Fig. 21 is a view schematically illustrating a relationship between torsion moment and the angle of twist with respect to the axis of the column. Fig. 22 is a graph illustrating the relationship between the twist angle and the twist moment. In the embodiment, a torsion spring constant $k\varphi$ around the joint is estimated from the relationship between the torsion angle and the torsion moment of the cable. As illustrated in Fig. 21, when a torsion angle $\varphi$ of the cable is defined when torsion moment M is applied to the cable, the relationship between torsion moment M and angle of twist $\varphi$ is expressed as $M = k\varphi \times \varphi$.

An example of the relationship between torsion moment M and angle of twist $\varphi$ applied to the cable by the robot arm is illustrated in the graph of Fig. 22. For example, an inclination of the graph is calculated as 25.7 by the least squares method. This corresponds to a torsion spring constant $k'\varphi$ of the entire cable. That is, because the segment unit length is 5 mm in the simulation, the number of segments $S_n$ included in the cable having the cable length of 300 mm is 60, and the number of joints N connecting them is also 60. Accordingly, $k\varphi$ = 1,542 is calculated from the relationship of $k'\varphi = k\varphi/N$.

In the embodiment, the damping coefficient is determined by trial and error while checking convergence of calculation.

<O. Program>

Processor 102 of information processing device 100 implements system simulation device 1A or cable simulation device 1B by executing the simulation program. Storage 111 can store programs, data, and the like in order to implement these simulation devices.

The storage medium of storage 111 is not limited to the HDD or the SSD.

In addition, the program or data regarding the simulation may be downloaded to storage 111 through various communication lines. Alternatively, the program or data may be downloaded to storage 111 through storage medium 114. Storage medium 114 is a medium that accumulates information such as the program by electrical, magnetic, optical, mechanical, or chemical action such that a computer, other devices, a machine, or the like can read the information such as the recorded program. Information processing device 100 may acquire the program or data regarding the simulation from storage medium 114.

The program can be executed by at least one processor circuit such as a CPU, or a combination of the processor and a circuit such as an application specific integrated circuit (ASIC) or a field-programmable gate array (FPGA).

<P. Appendix>

The above embodiment includes the following technical ideas.

[Configuration 1]

A simulation device (1) that calculates a behavior of a cable (340) attached to an instrument (30) through a plurality of guides ($G_n$), the simulation device including:

a partial cable behavior calculation unit (166) configured to calculate the behavior of a second target disposed in the virtual space corresponding to a partial cable ($C_n$) between the guides using a parameter set ($P_n$, $S_n$) regarding cable attachment including a position and a posture of each of the plurality of guides in a virtual space and a partial cable length between the guides based on the behavior of a first target corresponding to the instrument disposed in the virtual space;

a load calculation unit configured to calculate a load applied to the second target corresponding to the partial cable based on the behavior of the second target corresponding to the partial cable calculated by the partial cable behavior calculation unit using the parameter set for each of a plurality of the parameter sets for the each partial cable;

a parameter determination unit (167, 168, 169) configured to determine whether calculated magnitude of the load of the second target corresponding to the partial cable satisfies a constraint for each of the plurality of parameter sets for the each partial cable; and

a parameter decision unit (170) configured to decide a parameter set satisfying a condition regarding attachment of the entire cable into which partial cables are integrated, from at least one parameter set determined by the parameter determination unit to satisfy the constraint for the each partial cable.

[Configuration 2]

The simulation device described in configuration 1, in which the constraint includes a condition that the magnitude of the load applied to the second target corresponding to the partial cable does not exceed a threshold.

[Configuration 3]

The simulation device described in configuration 1, in which the constraint includes a condition that the magnitude of the load applied to the second target corresponding to the partial cable does not exceed a threshold when the length of the partial cable changes within a predetermined range (R).

[Configuration 4]

The simulation device described in any one of configurations 1 to 3, in which the condition regarding the attachment of the entire cable includes a condition that a position and a posture of a guide shared between the adjacent partial cables are common.

[Configuration 5]

The simulation device described in any one of configurations 1 to 4, in which the behavior of the first target includes a behavior calculated for each predetermined time step (ti), and
the partial cable behavior calculation unit calculates the behavior of the second target using the parameter set based on the behavior of the first target corresponding to the time step for each time step.

[Configuration 6]

The simulation device described in any one of configurations 1 to 5, in which the partial cable behavior calculation unit includes a physical simulator.

[Configuration 7]

The simulation device described in configuration 6, in which the second target includes a rigid link modeled by joining adjacent rigid bodies (304) with a joint (305) in a row, and
the physical simulator calculates the behavior of the second target by performing an arithmetic operation according to an equation representing a relationship between positions and postures of adjacent rigid bodies in the modeled rigid link and a constraint condition imposed on a relationship between positions and postures of the rigid bodies, the constraint condition being a condition corresponding to the joint, based on the behavior of the first target.

[Configuration 8]

The simulation device described in configuration 7, in which the constraint condition includes a parameter representing hardness of the cable.

[Configuration 9]

The simulation device described in configuration 8, in which the load includes a load applied to each of the rigid bodies included in the second target.

[Configuration 10]

The simulation device described in any one of configurations 1 to 9, further including an evaluation unit (177) configured to evaluate the behavior of the second target calculated by the partial cable behavior calculation unit based on the calculated load.

[Configuration 11]

The simulation device described in any one of configurations 1 to 10, in which the instrument includes a robot (30), and
the behavior of the first target is calculated by emulation of a robot program having an instruction code operating the robot.

[Configuration 12]

The simulation device described in configuration 11, in which the simulation device calculates a behavior of a target corresponding to a peripheral instrument (230) of the robot disposed in the virtual space by executing a simulation program (126, 122) including an instruction or a parameter controlling a peripheral instrument.

[Configuration 13]

The simulation device described in any one of configurations 1 to 11, further including an image generation unit (164) configured to generate an image visualizing the virtual space.

[Configuration 14]

A simulation program that causes a computer (100) to execute a method for calculating a behavior of a cable (340) attached to an instrument (30) through a plurality of guides ($G_n$),
in which the method includes:

calculating the behavior of a second target disposed in the virtual space corresponding to a partial cable between the guides using a parameter set ($P_n$, $S_n$) regarding cable attachment including a position and a posture of each of the plurality of guides in a virtual space and a partial cable length between the guides based on the behavior of a first target corresponding to the instrument disposed in the virtual space; and
determining a parameter for each of the partial cable,
the determining the parameter includes:

calculating a load applied to the second target corresponding to the partial cable based on the behavior of the second target corresponding to the partial cable calculated using the parameter set for each of a plurality of the parameter sets for the each partial cable; and
determining whether calculated magnitude of the load of the second target corresponding to the partial cable satisfies a constraint for each of the plurality of parameter sets for the each partial cable, and
the method further includes deciding a parameter set satisfying a condition regarding attachment of the entire cable into which partial cables are integrated, from at least one parameter set determined to satisfy the constraint for the each partial cable in the determining the parameter.

It should be considered that the disclosed embodiment is an example in all respects and not restrictive. The scope of the present invention is defined by not the description of the embodiment, but the claims, and it is intended that all changes within the meaning and scope of the claims are included in the present invention.

REFERENCE SIGNS LIST

1: simulation device, 1A: system simulation device, 1B: cable simulation device, 2: control system, 30: robot, 100: information processing device, 102: processor, 104: main memory, 105: virtual space information, 106: operation unit, 108: output unit, 109: display, 110: network interface, 111: storage, 112: optical drive, 114: storage medium, 116: local communication interface, 118: internal bus, 120: virtual time generation program, 121: relay program, 122: physical simulation program, 124: physical simulation parameter, 126: PLC simulation program, 130: robot emulation program, 132: robot parameter, 134: integration program, 135: 3D visualization data, 136: image processing program, 137: cable simulation program, 139: cable parameter, 142: load information, 143: evaluation program, 144: evaluation data, 145: parameter setting program, 147: simultaneous equation, 150: virtual space information management module, 151: instrument behavior generation module, 152: PLC simulator, 154: period generation module, 155: workpiece behavior simulator, 156: physical simulator, 158: relay module, 160: robot emulator, 162: workpiece tracking module, 164: 3D visualizer, 165: cable simulator, 166: partial cable behavior calculation module, 167: load calculation module, 168: constraint determination module, 169: robustness determination module, 170: parameter decision module, 177: evaluation module, 210: robot hand, 232: workpiece, 252: behavior data, 253: image data, 301: arm, 304: rigid body, 306: surface, 310: robot controller, 340: entire cable, 341, 342, 343, $C_n$: partial cable, 350, 351, G, $G_n$: cable guide, 1371: constraint determination program, 2520: instrument behavior data, 2521: cable behavior data, 2530: instrument image data, 2531: cable image data, $S_n$: segment number, $P_n$: behavior and posture, R: range

## Claims

1. A simulation device that calculates a behavior of a cable attached to an instrument through a plurality of guides, the simulation device comprising:

a partial cable behavior calculation unit configured to calculate a behavior of a second target disposed in a virtual space corresponding to a partial cable between guides using a parameter set regarding cable attachment including a position and a posture of each of the plurality of guides in the virtual space and a partial cable length between the guides based on a behavior of a first target corresponding to the instrument disposed in the virtual space;
a load calculation unit configured to calculate a load applied to the second target corresponding to the partial cable based on the behavior of the second target corresponding to the partial cable calculated by the partial cable behavior calculation unit using the parameter set for each of a plurality of the parameter sets for the each partial cable;
a parameter determination unit configured to determine whether calculated magnitude of the load of the second target corresponding to the partial cable satisfies a constraint for each of the plurality of parameter sets for the each partial cable; and
a parameter decision unit configured to decide a parameter set satisfying a condition regarding attachment of an entire cable into which partial cables are integrated, from at least one parameter set determined by the parameter determination unit to satisfy the constraint for the each partial cable.

**2.** The simulation device according to claim 1, wherein the constraint includes a condition that the magnitude of the load applied to the second target corresponding to the partial cable does not exceed a threshold.

**3.** The simulation device according to claim 1, wherein the constraint includes a condition that the magnitude of the load applied to the second target corresponding to the partial cable does not exceed a threshold when the length of the partial cable changes within a predetermined range.

**4.** The simulation device according to any one of claims 1 to 3,
wherein the condition regarding the attachment of the entire cable includes a condition that a position and a posture of a guide shared between the adjacent partial cables are common.

**5.** The simulation device according to any one of claims 1 to 4, wherein the behavior of the first target includes a behavior calculated for each predetermined time step, and
the partial cable behavior calculation unit calculates the behavior of the second target using the parameter set based on the behavior of the first target corresponding to the time step for each time step.

**6.** The simulation device according to any one of claims 1 to 5,
wherein the partial cable behavior calculation unit includes a physical simulator.

**7.** The simulation device according to claim 6, wherein the second target includes a rigid link modeled by joining adjacent rigid bodies with a j oint in a row, and
the physical simulator calculates the behavior of the second target by performing an arithmetic operation according to an equation representing a relationship between positions and postures of adjacent rigid bodies in the modeled rigid link and a constraint condition imposed on a relationship between positions and postures of the rigid bodies, the constraint condition being a condition corresponding to the joint, based on the behavior of the first target.

**8.** The simulation device according to claim 7, wherein the constraint condition includes a parameter representing hardness of the cable.

**9.** The simulation device according to claim 8, wherein the load includes a load applied to each of the rigid bodies included in the second target.

**10.** The simulation device according to any one of claims 1 to 9, further comprising an evaluation unit configured to evaluate the behavior of the second target calculated by the partial cable behavior calculation unit based on the calculated load.

**11.** The simulation device according to any one of claims 1 to 10, wherein the instrument includes a robot, and
the behavior of the first target is calculated by emulation of a robot program having an instruction code operating the robot.

**12.** The simulation device according to claim 11, wherein the simulation device calculates a behavior of a target corresponding to a peripheral instrument of the robot disposed in the virtual space by executing a simulation program including an instruction or a parameter controlling the peripheral instrument.

**13.** The simulation device according to any one of claims 1 to 12, further comprising an image generation unit configured to generate an image visualizing the virtual space.

**14.** A simulation program that causes a computer to execute a method for calculating a behavior of a cable attached to an instrument through a plurality of guides,
wherein the method includes:

calculating a behavior of a second target disposed in a virtual space corresponding to a partial cable between guides using a parameter set regarding cable attachment including a position and a posture of each of the plurality of guides in the virtual space and a partial cable length between the guides based on a behavior of a first target corresponding to the instrument disposed in the virtual space; and
determining a parameter for each of the partial cable,
the determining the parameter includes:

calculating a load applied to the second target corresponding to the partial cable based on the behavior of the second target corresponding to the partial cable calculated using the parameter set for each of a plurality of the parameter sets for the each partial cable; and
determining whether calculated magnitude of the load of the second target corresponding to the partial cable satisfies a constraint for each of the plurality of parameter sets for the each partial cable, and
the method further includes deciding a parameter set satisfying a condition regarding attachment of an entire cable into which partial cables are integrated, from at least one parameter set determined to satisfy the constraint for the each partial cable in the determining the parameter.

FIG.1

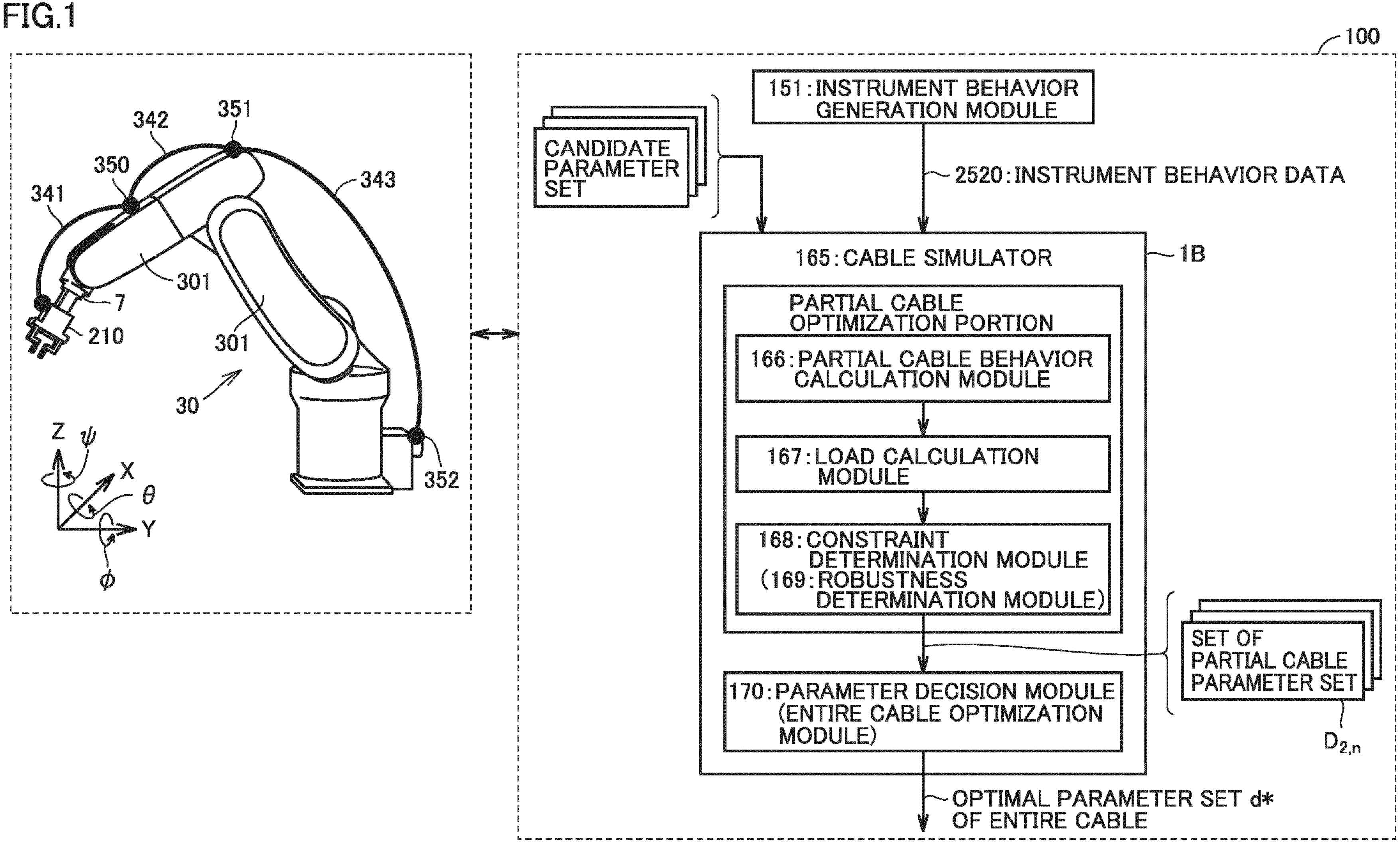

100
151: INSTRUMENT BEHAVIOR GENERATION MODULE
2520: INSTRUMENT BEHAVIOR DATA
CANDIDATE PARAMETER SET
165: CABLE SIMULATOR
1B
PARTIAL CABLE OPTIMIZATION PORTION
166: PARTIAL CABLE BEHAVIOR CALCULATION MODULE
167: LOAD CALCULATION MODULE
168: CONSTRAINT DETERMINATION MODULE
(169: ROBUSTNESS DETERMINATION MODULE)
170: PARAMETER DECISION MODULE (ENTIRE CABLE OPTIMIZATION MODULE)
SET OF PARTIAL CABLE PARAMETER SET
$D_{2,n}$
OPTIMAL PARAMETER SET d* OF ENTIRE CABLE
341
342
343
350
351
352
301
301
7
210
30
Z
ψ
X
θ
Y
ϕ

FIG.2

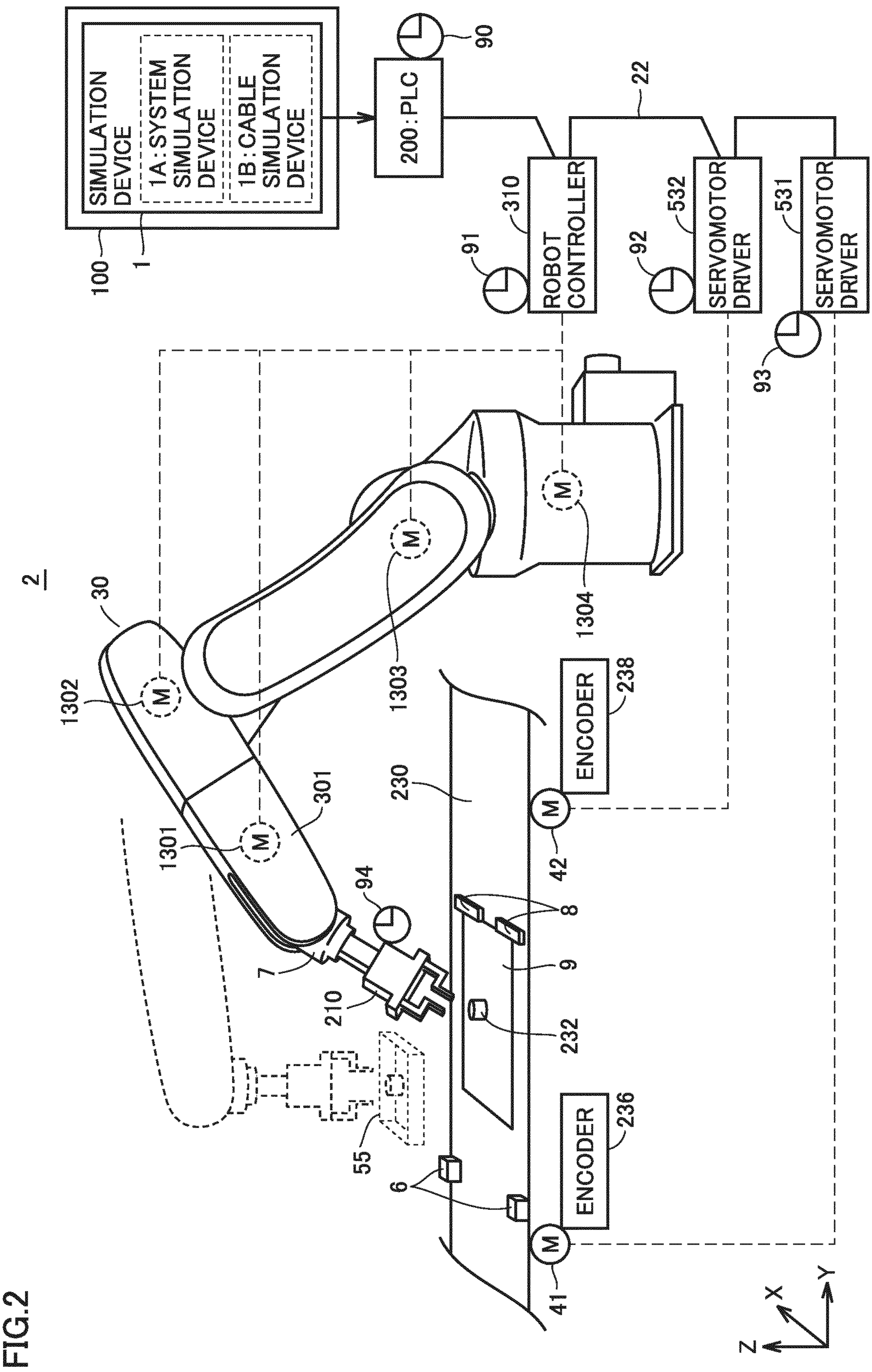
SIMULATION DEVICE
1A: SYSTEM SIMULATION DEVICE
1B: CABLE SIMULATION DEVICE
100
1
200: PLC
90
22
ROBOT CONTROLLER
310
91
SERVOMOTOR DRIVER
532
92
SERVOMOTOR DRIVER
531
93
2
30
1302
M
1303
1304
1301
301
94
7
210
55
6
8
9
232
230
ENCODER
238
ENCODER
236
42
41
X
Y
Z

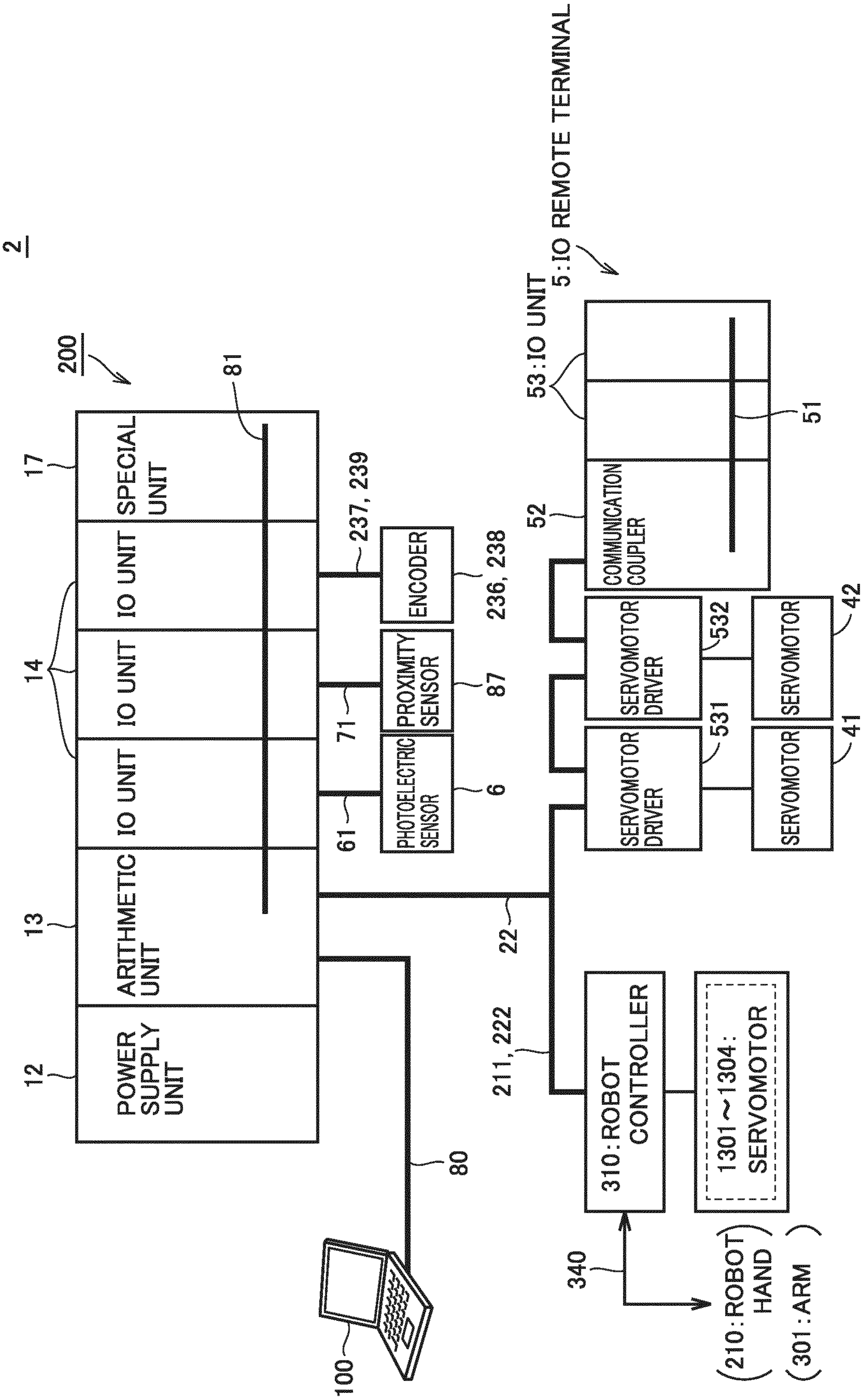
2
200
12
POWER SUPPLY UNIT
13
ARITHMETIC UNIT
14
IO UNIT
IO UNIT
IO UNIT
17
SPECIAL UNIT
81
237, 239
ENCODER
236, 238
PROXIMITY SENSOR
87
71
PHOTOELECTRIC SENSOR
6
61
22
80
100
211, 222
310: ROBOT CONTROLLER
1301~1304: SERVOMOTOR
340
(210: ROBOT HAND)
(301: ARM)
5: IO REMOTE TERMINAL
53: IO UNIT
51
52
COMMUNICATION COUPLER
SERVOMOTOR DRIVER
SERVOMOTOR DRIVER
531
532
SERVOMOTOR
SERVOMOTOR
41
42

FIG.3

FIG.4

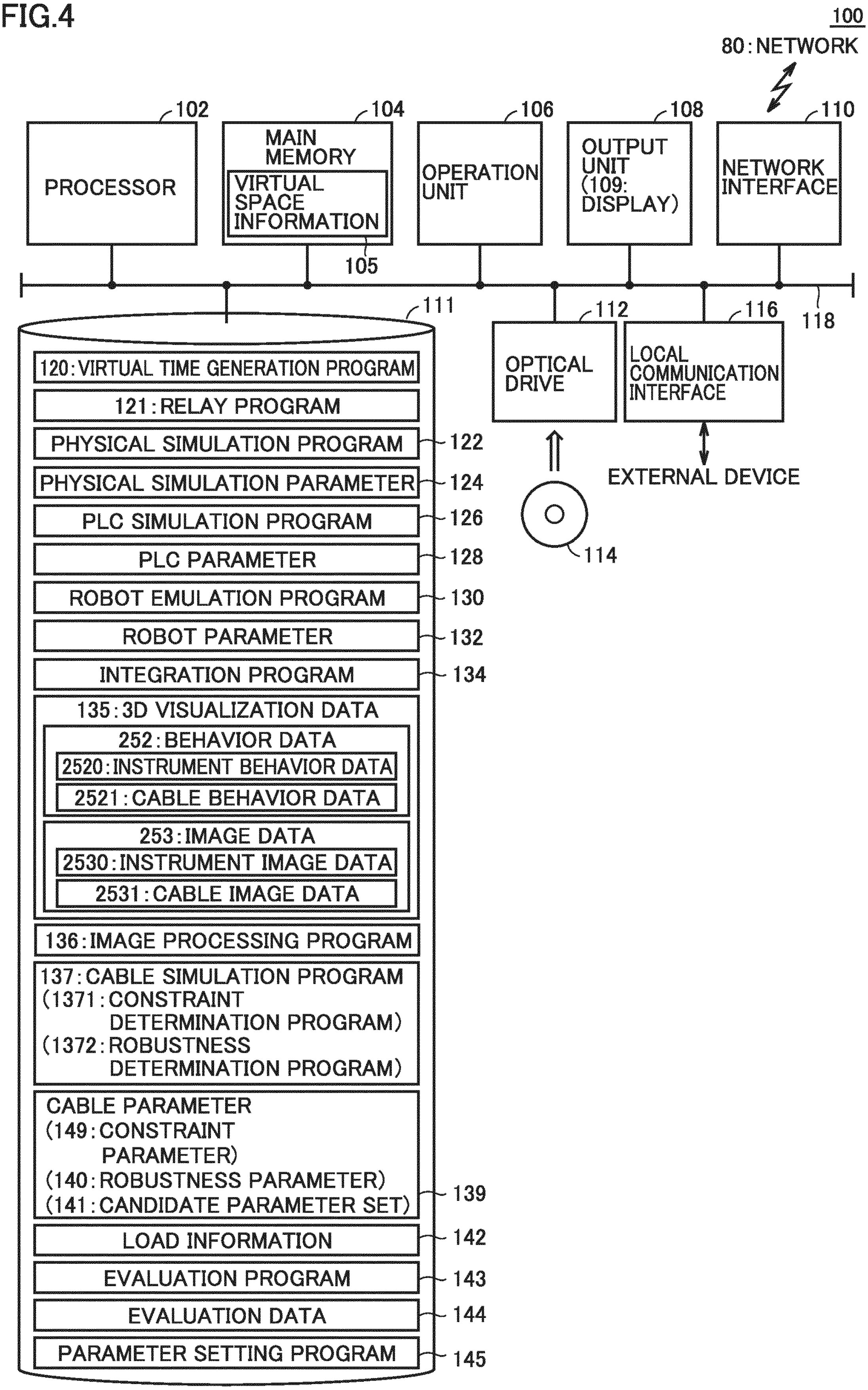
100
80: NETWORK
102
PROCESSOR
104
MAIN MEMORY
VIRTUAL SPACE INFORMATION
105
106
OPERATION UNIT
108
OUTPUT UNIT (109: DISPLAY)
110
NETWORK INTERFACE
111
112
OPTICAL DRIVE
114
116
LOCAL COMMUNICATION INTERFACE
EXTERNAL DEVICE
118
120: VIRTUAL TIME GENERATION PROGRAM
121: RELAY PROGRAM
PHYSICAL SIMULATION PROGRAM
122
PHYSICAL SIMULATION PARAMETER
124
PLC SIMULATION PROGRAM
126
PLC PARAMETER
128
ROBOT EMULATION PROGRAM
130
ROBOT PARAMETER
132
INTEGRATION PROGRAM
134
135: 3D VISUALIZATION DATA
252: BEHAVIOR DATA
2520: INSTRUMENT BEHAVIOR DATA
2521: CABLE BEHAVIOR DATA
253: IMAGE DATA
2530: INSTRUMENT IMAGE DATA
2531: CABLE IMAGE DATA
136: IMAGE PROCESSING PROGRAM
137: CABLE SIMULATION PROGRAM
(1371: CONSTRAINT DETERMINATION PROGRAM)
(1372: ROBUSTNESS DETERMINATION PROGRAM)
CABLE PARAMETER
(149: CONSTRAINT PARAMETER)
(140: ROBUSTNESS PARAMETER)
(141: CANDIDATE PARAMETER SET)
139
LOAD INFORMATION
142
EVALUATION PROGRAM
143
EVALUATION DATA
144
PARAMETER SETTING PROGRAM
145

FIG.5

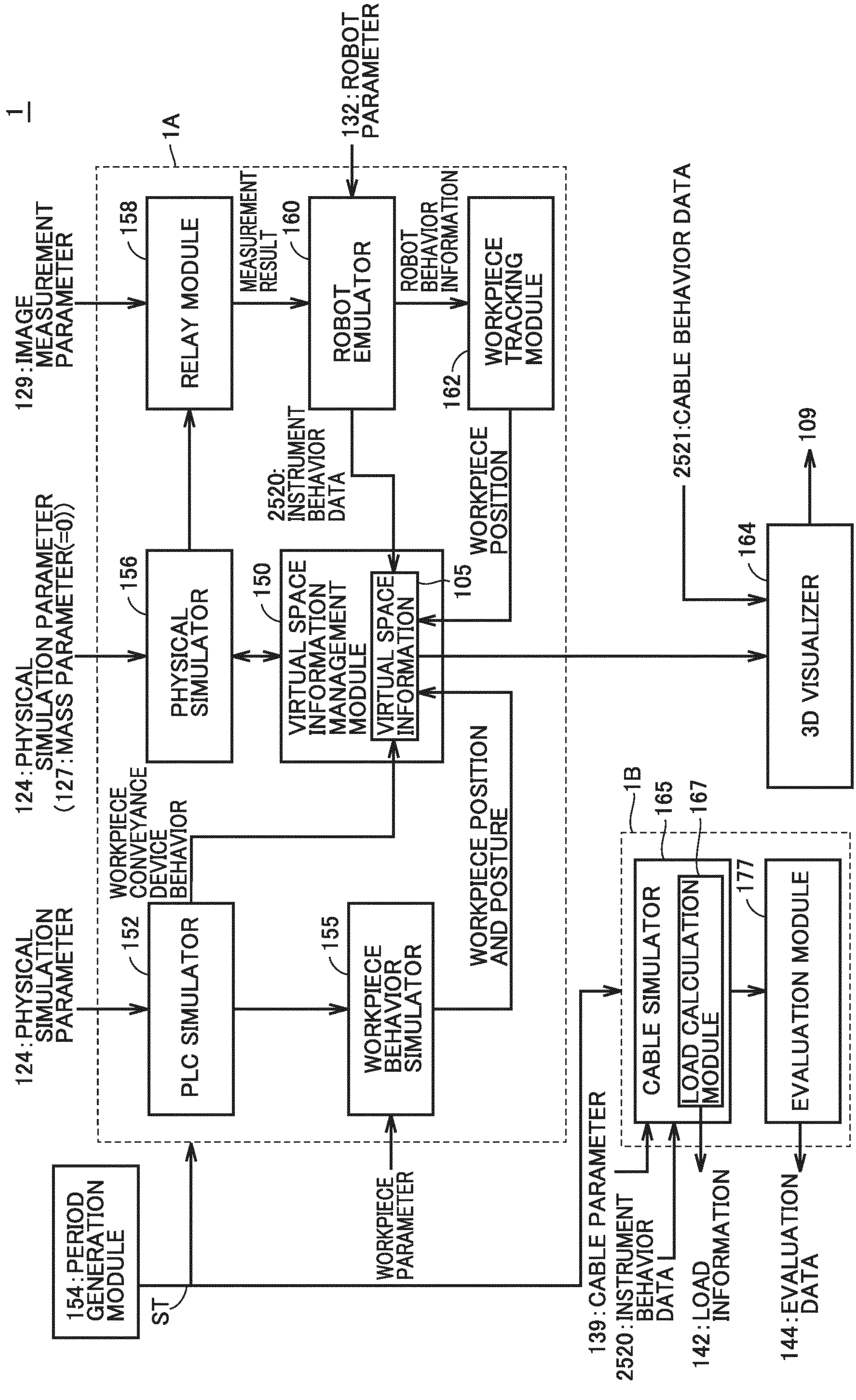
1
1A
154: PERIOD GENERATION MODULE
ST
124: PHYSICAL SIMULATION PARAMETER
152
PLC SIMULATOR
WORKPIECE CONVEYANCE DEVICE BEHAVIOR
155
WORKPIECE BEHAVIOR SIMULATOR
WORKPIECE PARAMETER
WORKPIECE POSITION AND POSTURE
124: PHYSICAL SIMULATION PARAMETER
(127: MASS PARAMETER(=0))
156
PHYSICAL SIMULATOR
150
VIRTUAL SPACE INFORMATION MANAGEMENT MODULE
VIRTUAL SPACE INFORMATION
105
129: IMAGE MEASUREMENT PARAMETER
158
RELAY MODULE
MEASUREMENT RESULT
132: ROBOT PARAMETER
160
ROBOT EMULATOR
2520: INSTRUMENT BEHAVIOR DATA
ROBOT BEHAVIOR INFORMATION
162
WORKPIECE TRACKING MODULE
WORKPIECE POSITION
2521: CABLE BEHAVIOR DATA
164
3D VISUALIZER
109
1B
165
CABLE SIMULATOR
167
LOAD CALCULATION MODULE
177
EVALUATION MODULE
139: CABLE PARAMETER
2520: INSTRUMENT BEHAVIOR DATA
142: LOAD INFORMATION
144: EVALUATION DATA

FIG.6

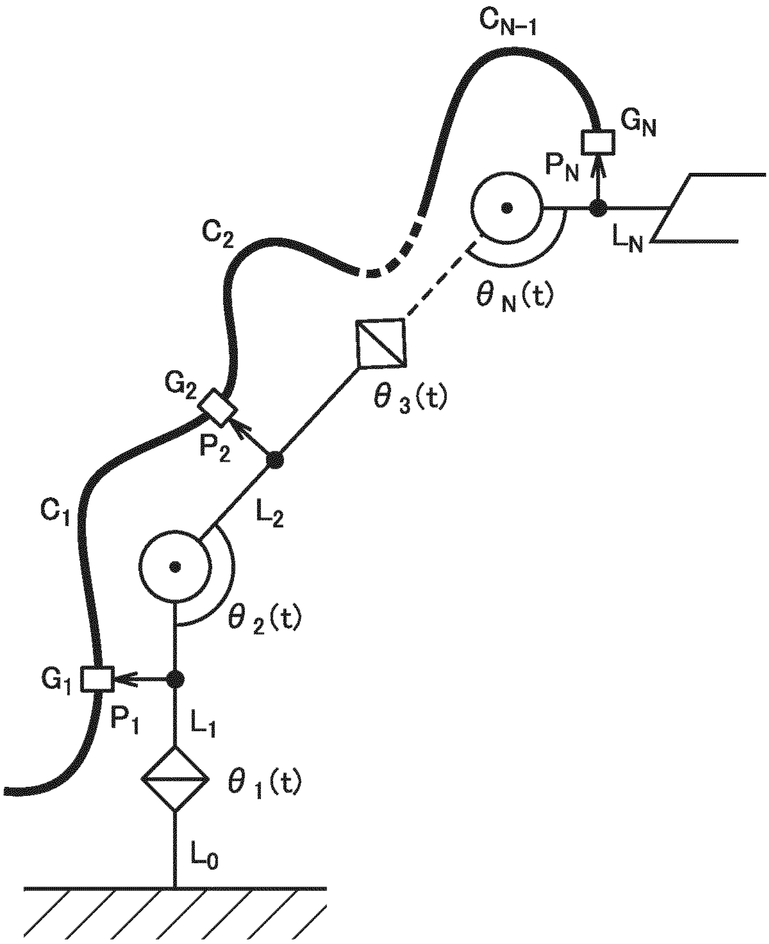
C N-1
G N
P N
L N
θ N(t)
C 2
G 2
P 2
θ 3(t)
C 1
L 2
θ 2(t)
G 1
P 1
L 1
θ 1(t)
L 0

FIG.7

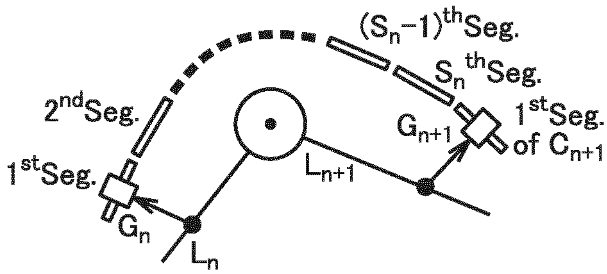
(Sn-1)thSeg.
SnthSeg.
2ndSeg.
Gn+1
1stSeg. of Cn+1
1stSeg.
Ln+1
Gn
Ln

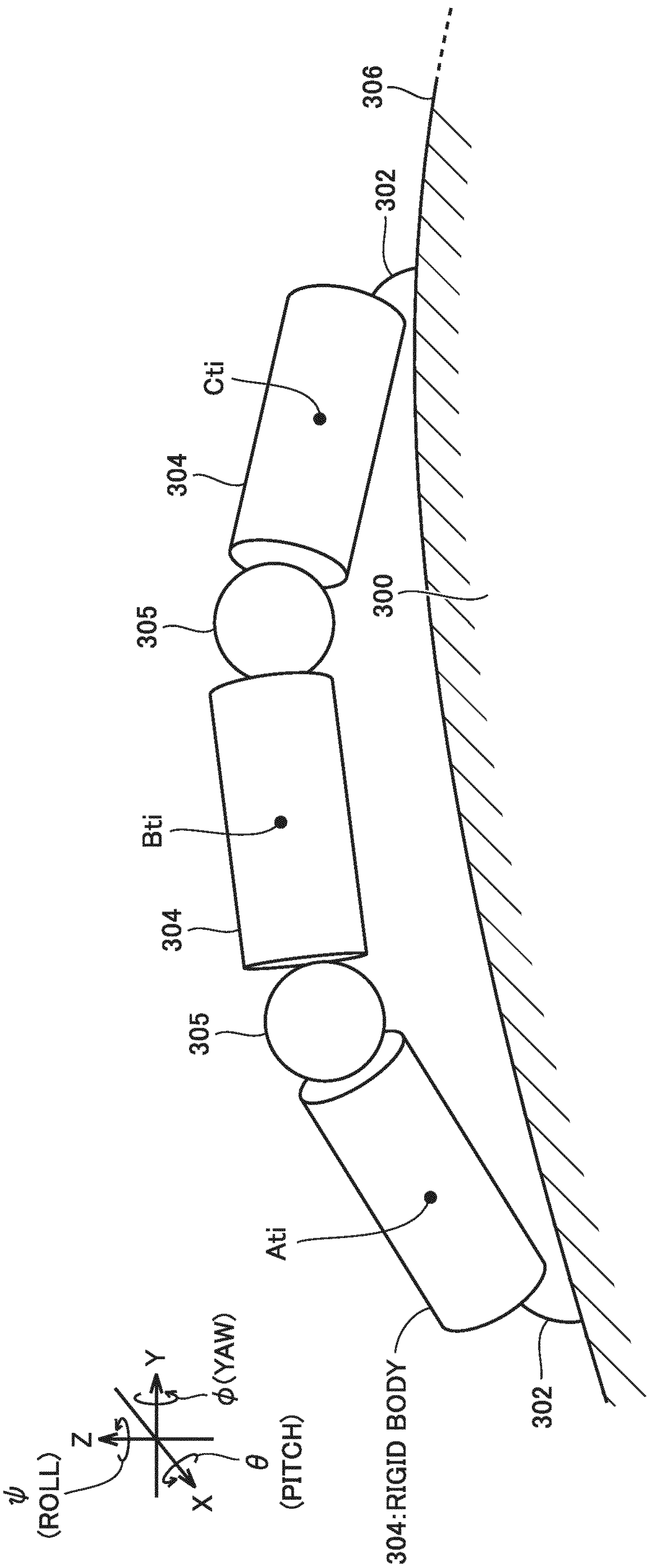

306
302
304
Cti
305
300
304
Bti
305
Ati
304:RIGID BODY
302
ψ
(ROLL)
Z
Y
φ(YAW)
X
θ
(PITCH)


FIG.8

FIG.9

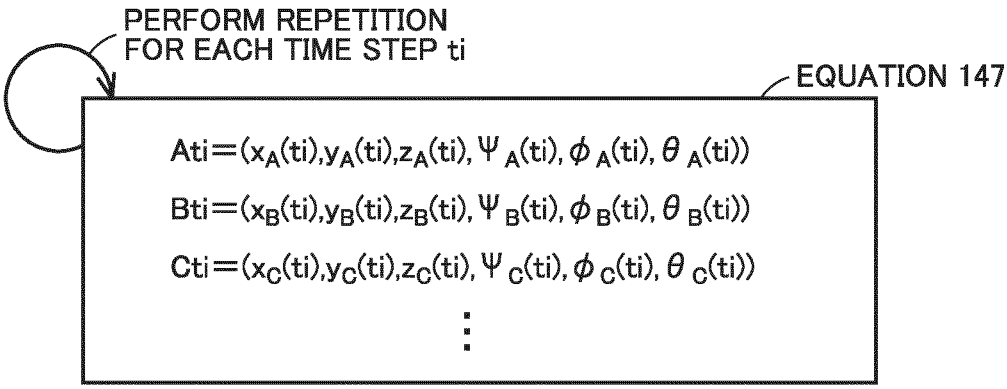
PERFORM REPETITION
FOR EACH TIME STEP ti
EQUATION 147
$Ati = (x_A(ti), y_A(ti), z_A(ti), \Psi_A(ti), \phi_A(ti), \theta_A(ti))$
$Bti = (x_B(ti), y_B(ti), z_B(ti), \Psi_B(ti), \phi_B(ti), \theta_B(ti))$
$Cti = (x_C(ti), y_C(ti), z_C(ti), \Psi_C(ti), \phi_C(ti), \theta_C(ti))$
⋮

FIG.10

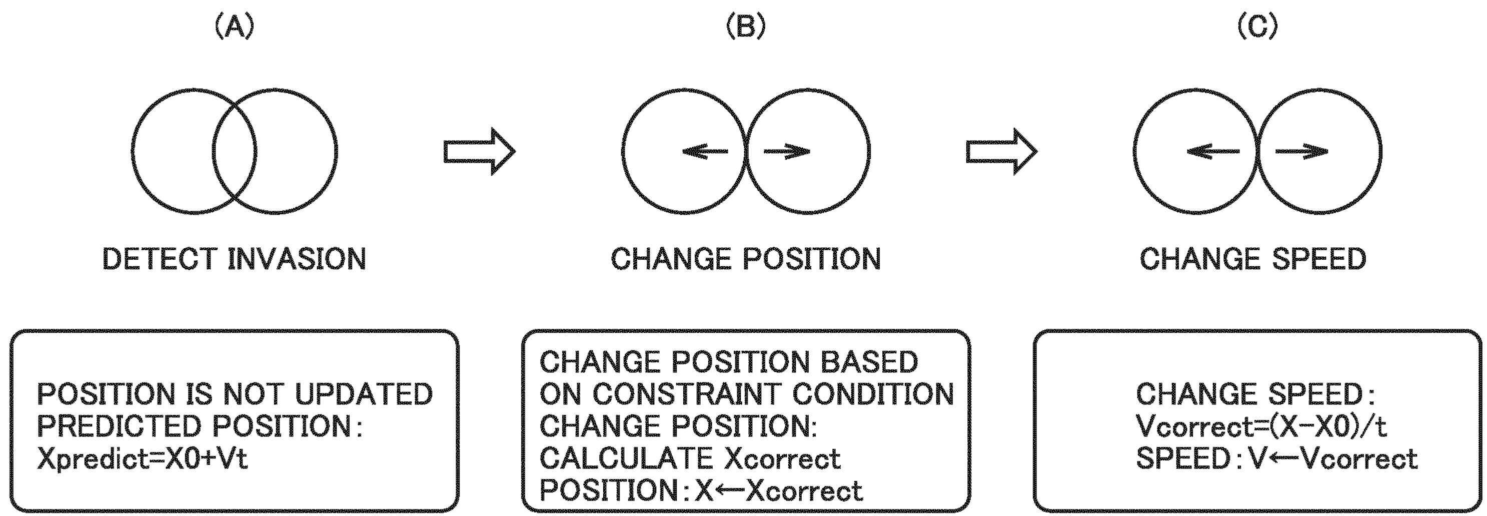
(A)
(B)
(C)
DETECT INVASION
CHANGE POSITION
CHANGE SPEED
POSITION IS NOT UPDATED
PREDICTED POSITION:
Xpredict=X0+Vt
CHANGE POSITION BASED
ON CONSTRAINT CONDITION
CHANGE POSITION:
CALCULATE Xcorrect
POSITION: X←Xcorrect
CHANGE SPEED:
Vcorrect=(X−X0)/t
SPEED: V←Vcorrect

FIG.11

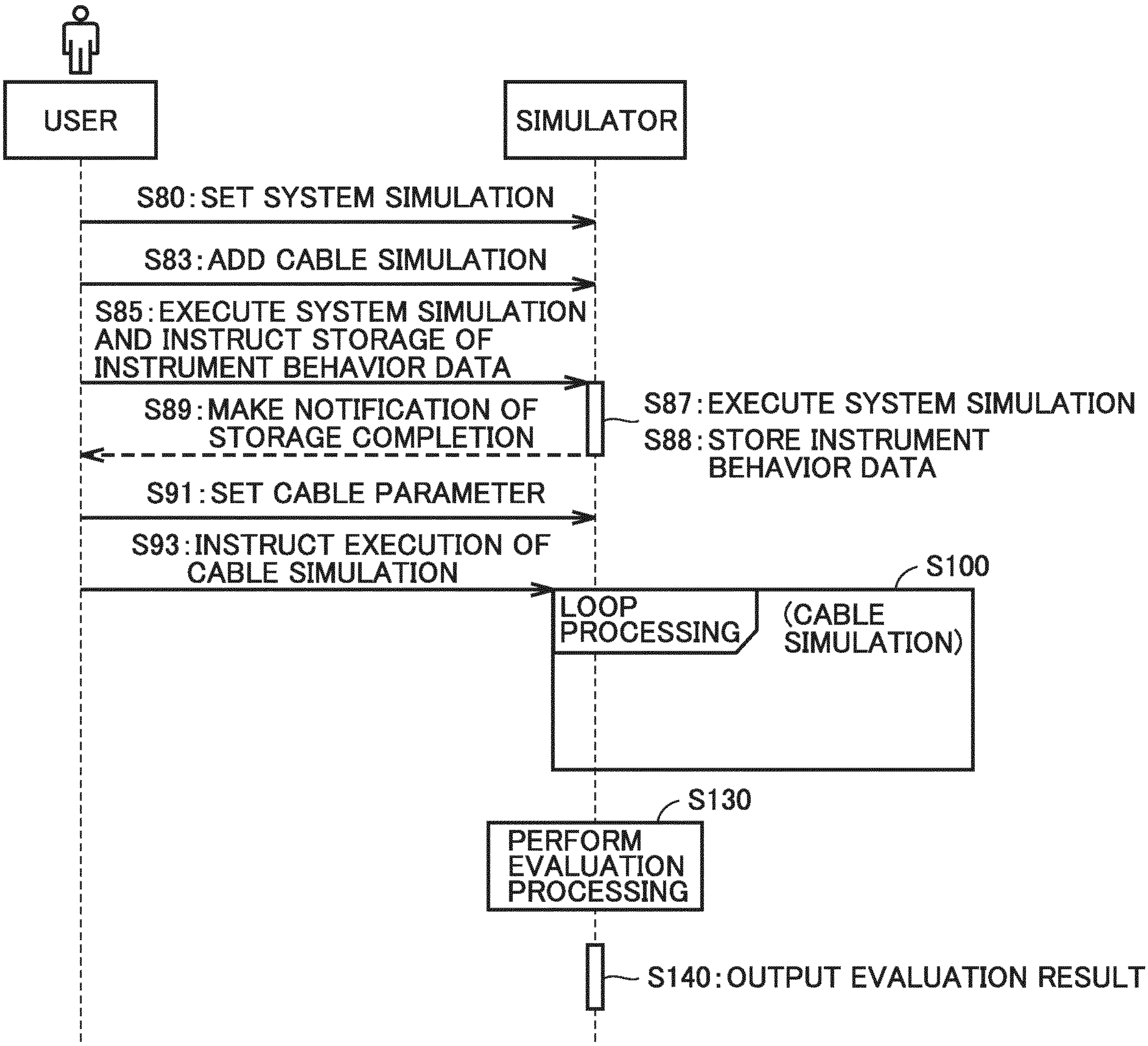
USER
SIMULATOR
S80: SET SYSTEM SIMULATION
S83: ADD CABLE SIMULATION
S85: EXECUTE SYSTEM SIMULATION AND INSTRUCT STORAGE OF INSTRUMENT BEHAVIOR DATA
S87: EXECUTE SYSTEM SIMULATION
S88: STORE INSTRUMENT BEHAVIOR DATA
S89: MAKE NOTIFICATION OF STORAGE COMPLETION
S91: SET CABLE PARAMETER
S93: INSTRUCT EXECUTION OF CABLE SIMULATION
S100
LOOP PROCESSING
(CABLE SIMULATION)
S130
PERFORM EVALUATION PROCESSING
S140: OUTPUT EVALUATION RESULT

FIG.12

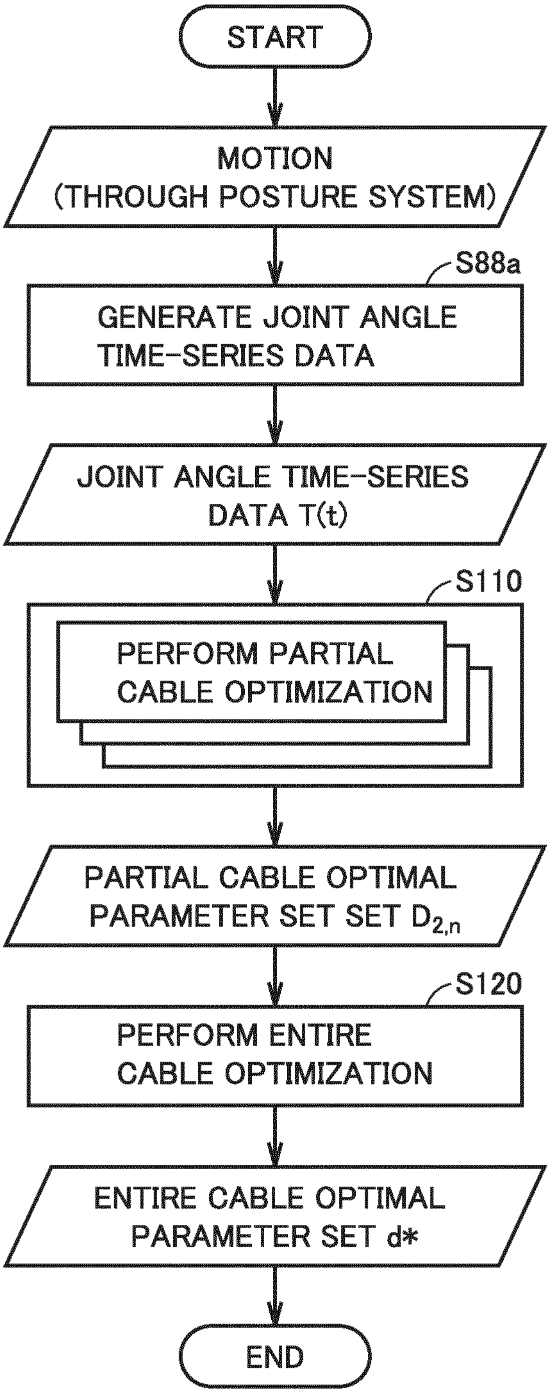
START
MOTION
(THROUGH POSTURE SYSTEM)
S88a
GENERATE JOINT ANGLE
TIME-SERIES DATA
JOINT ANGLE TIME-SERIES
DATA T(t)
S110
PERFORM PARTIAL
CABLE OPTIMIZATION
PARTIAL CABLE OPTIMAL
PARAMETER SET SET $D_{2,n}$
S120
PERFORM ENTIRE
CABLE OPTIMIZATION
ENTIRE CABLE OPTIMAL
PARAMETER SET d*
END

FIG.13

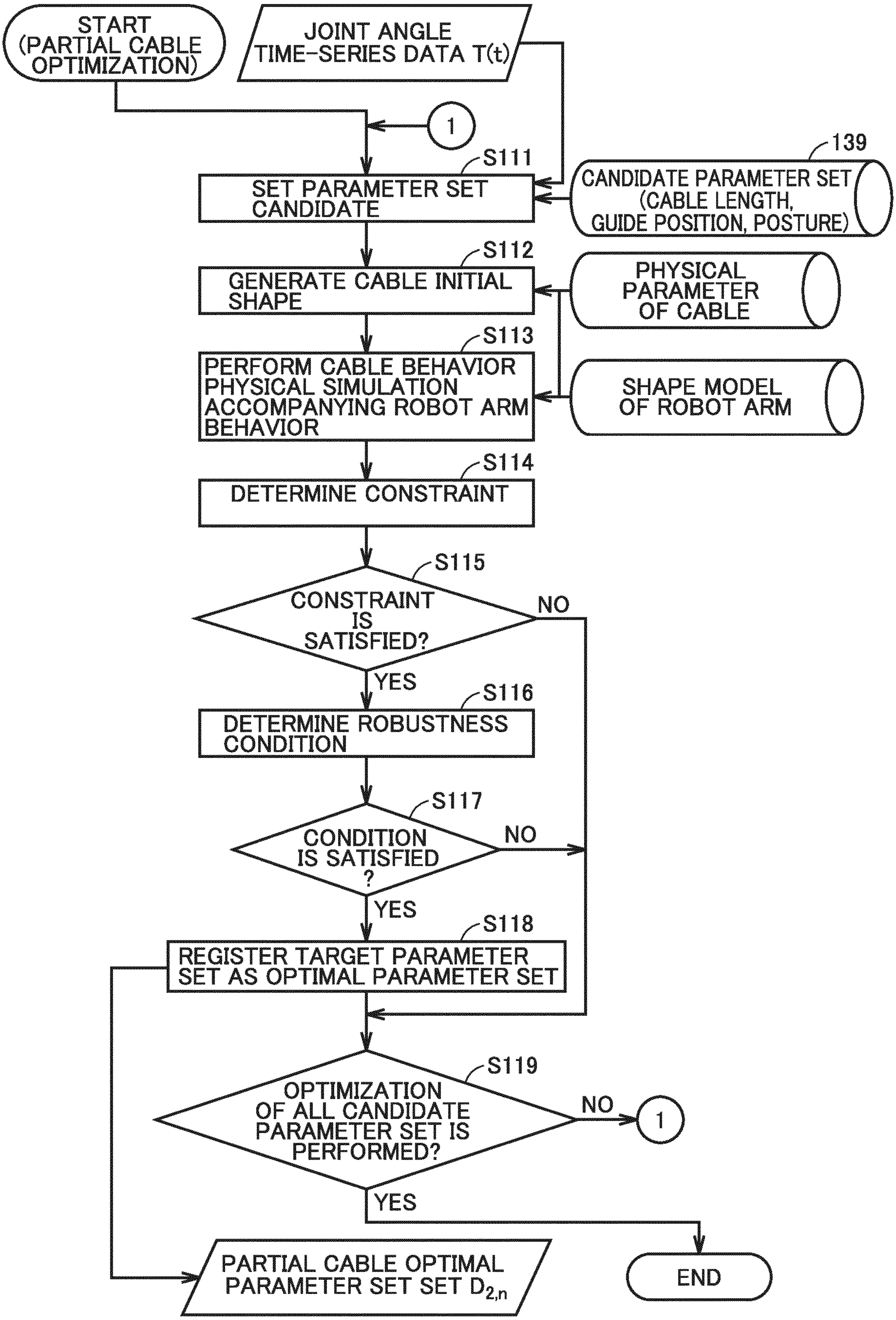
START
(PARTIAL CABLE
OPTIMIZATION)
JOINT ANGLE
TIME-SERIES DATA T(t)
1
S111
SET PARAMETER SET
CANDIDATE
139
CANDIDATE PARAMETER SET
(CABLE LENGTH,
GUIDE POSITION, POSTURE)
S112
GENERATE CABLE INITIAL
SHAPE
PHYSICAL
PARAMETER
OF CABLE
S113
PERFORM CABLE BEHAVIOR
PHYSICAL SIMULATION
ACCOMPANYING ROBOT ARM
BEHAVIOR
SHAPE MODEL
OF ROBOT ARM
S114
DETERMINE CONSTRAINT
S115
CONSTRAINT
IS
SATISFIED?
NO
YES
S116
DETERMINE ROBUSTNESS
CONDITION
S117
CONDITION
IS SATISFIED
?
NO
YES
S118
REGISTER TARGET PARAMETER
SET AS OPTIMAL PARAMETER SET
S119
OPTIMIZATION
OF ALL CANDIDATE
PARAMETER SET IS
PERFORMED?
NO
1
YES
PARTIAL CABLE OPTIMAL
PARAMETER SET SET $D_{2,n}$
END

FIG.14

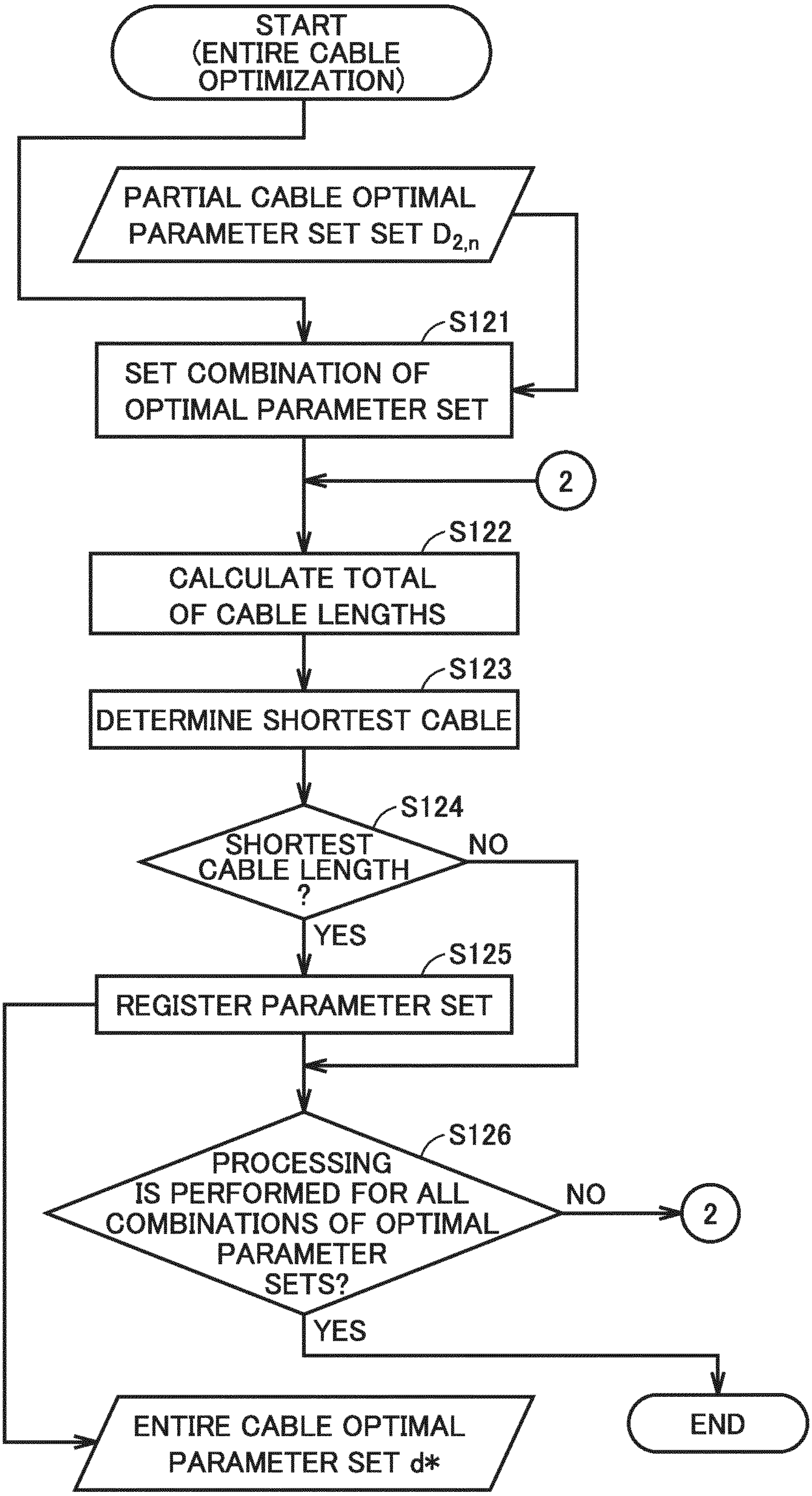
START
(ENTIRE CABLE
OPTIMIZATION)
PARTIAL CABLE OPTIMAL
PARAMETER SET SET $D_{2,n}$
S121
SET COMBINATION OF
OPTIMAL PARAMETER SET
2
S122
CALCULATE TOTAL
OF CABLE LENGTHS
S123
DETERMINE SHORTEST CABLE
S124
SHORTEST
CABLE LENGTH
?
NO
YES
S125
REGISTER PARAMETER SET
S126
PROCESSING
IS PERFORMED FOR ALL
COMBINATIONS OF OPTIMAL
PARAMETER
SETS?
NO
2
YES
ENTIRE CABLE OPTIMAL
PARAMETER SET d*
END

FIG.15

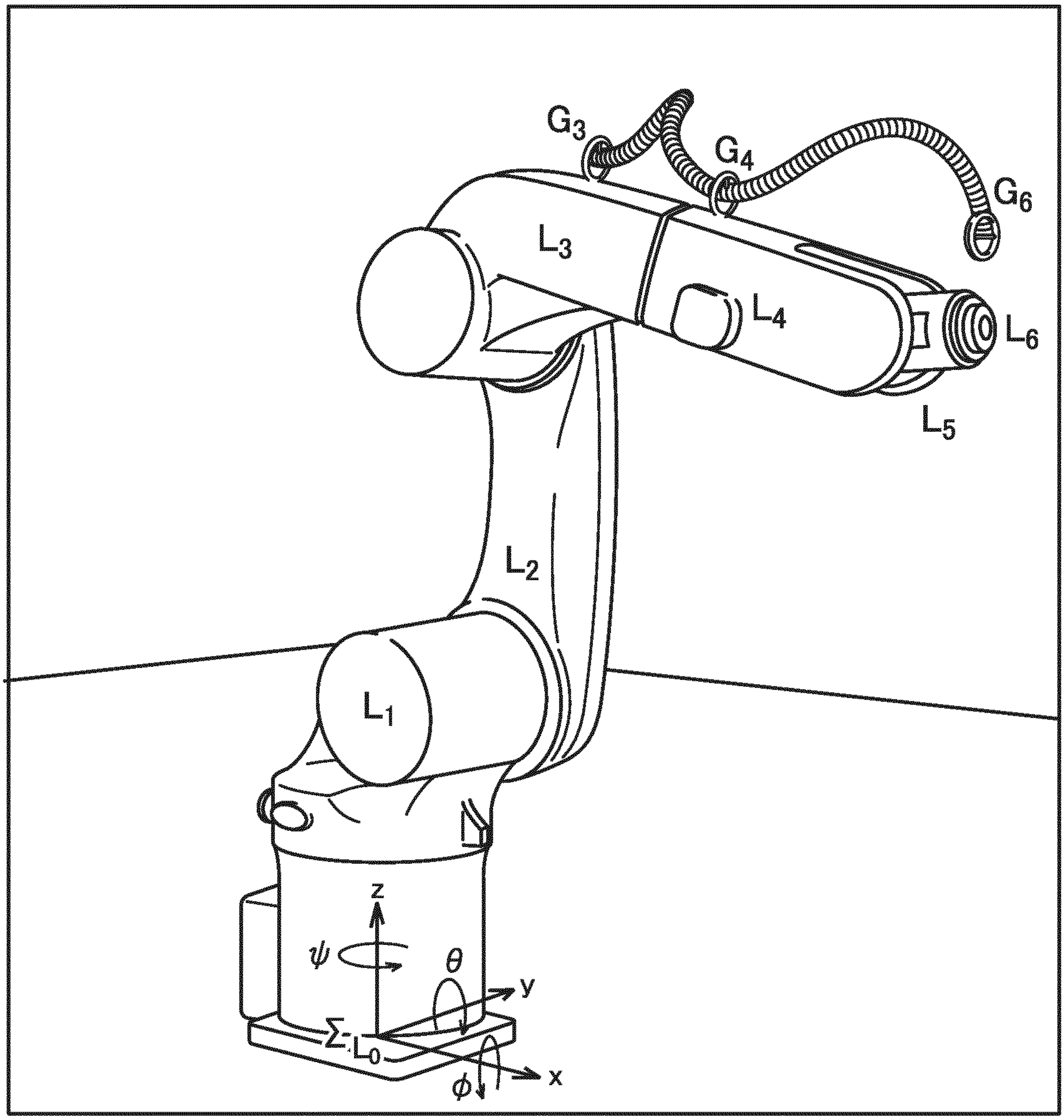

FIG.16

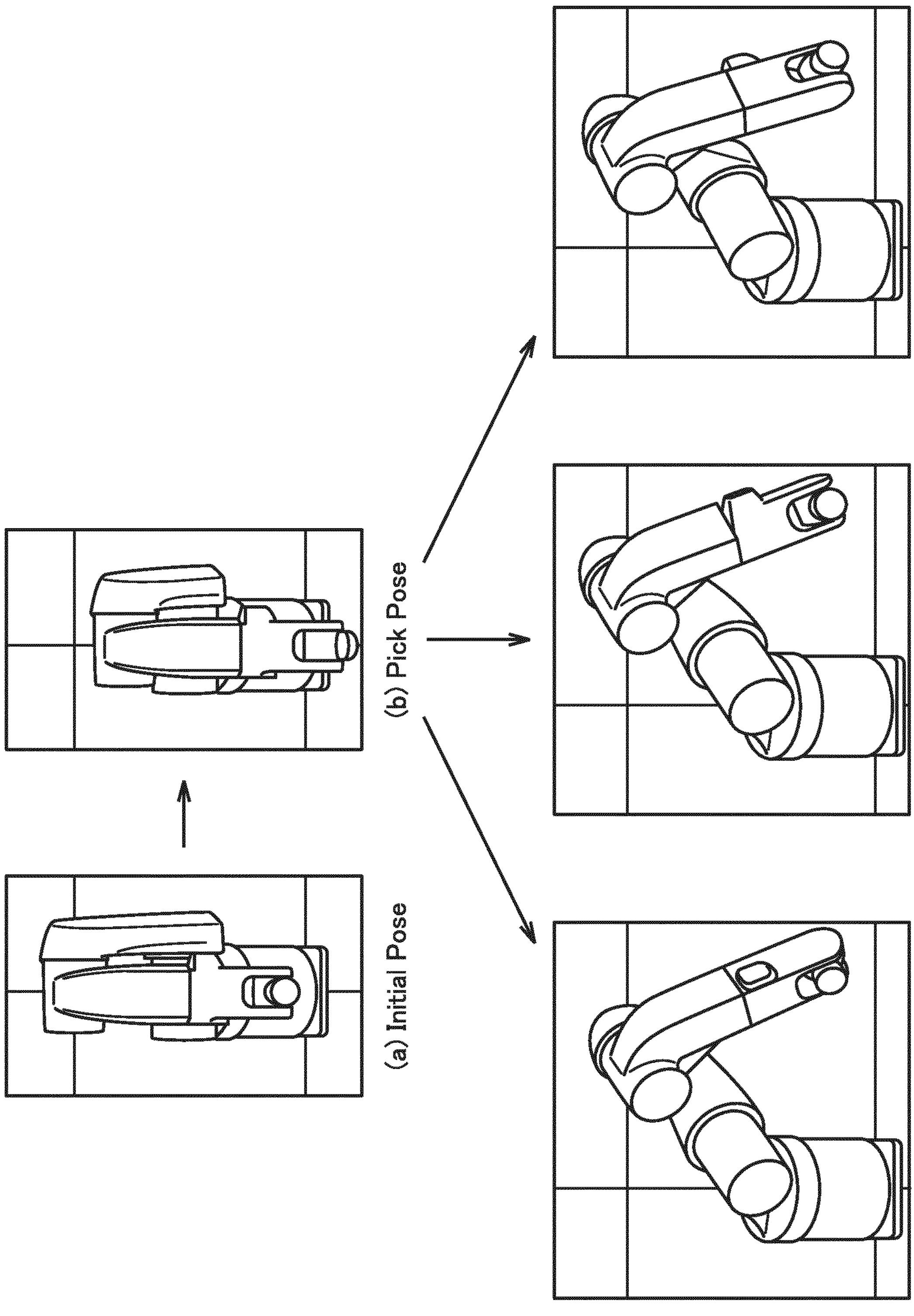
(a) Initial Pose
(b) Pick Pose
(c) Place Pose (−45°)
(d) Place Pose (0°)
(e) Place Pose (45°)

FIG.17

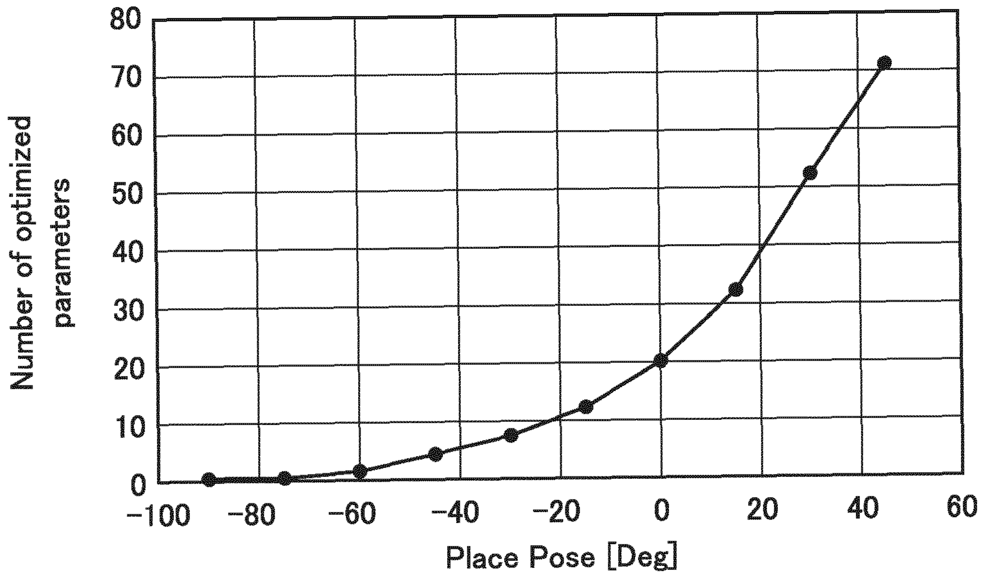
Number of optimized parameters
80
70
60
50
40
30
20
10
0
−100
−80
−60
−40
−20
0
20
40
60
Place Pose [Deg]

FIG.18

| Motion | 45° | | 0° | −45° |
|---|---|---|---|---|
| d* ($S_3$,$S_4$, $P_3$,$P_4$) | right-to-left shape | left-to-right shape | left-to-right shape | left-to-right shape |
| | (48,60, (0,40,0,0,0,0), (50,0,0,0,0,−90)) | (48,60, (0,−40,0,0,0,0), (50,0,0,0,0,90)) | (52,60, (0,−40,0,0,0,0), (50,0,20,0,0,90)) | (44,72, (0,−40,0,0,0,0), (0,−50,20,0,0,90)) |
| Pick | 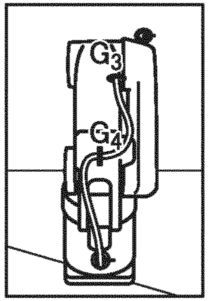  | 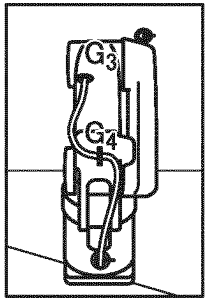  | 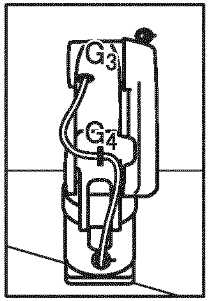  | 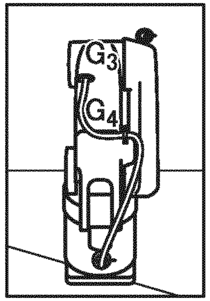  |
| Place | 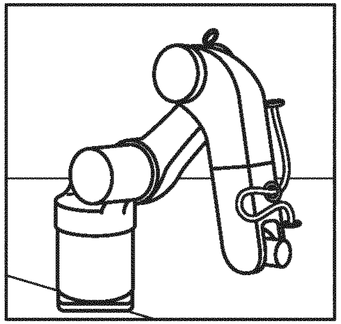 | 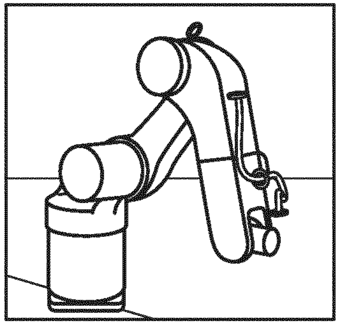 | 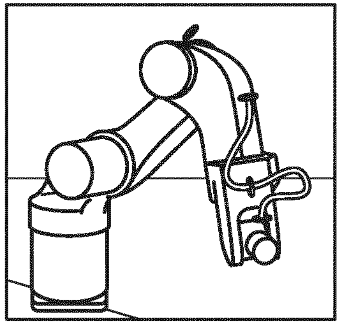 | 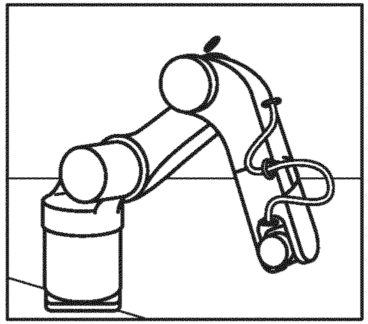 |

FIG.19

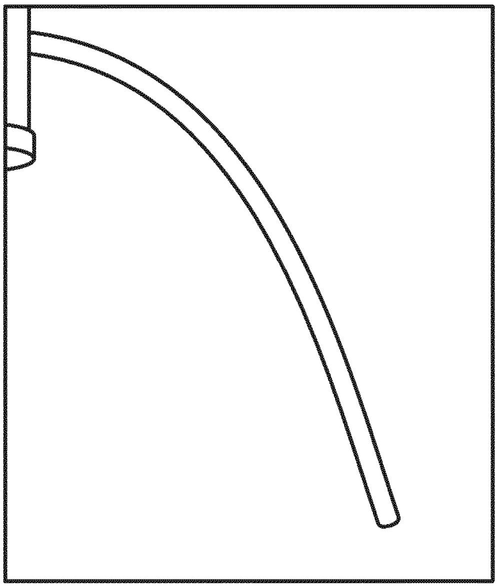

(a) ACTUAL EXPERIMENT

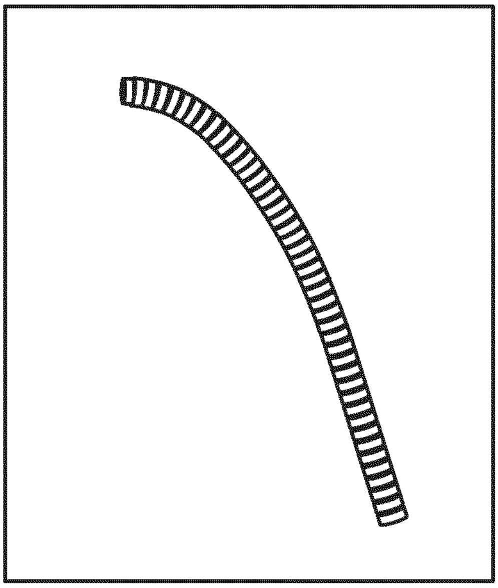

(b) SIMULATION

FIG.20

RELATIONSHIP BETWEEN CABLE LENGTH AND VERTICAL DISPLACEMENT

| Cable Length[mm] | 100 | 120 | 140 | 160 | 180 | 200 |
|---|---|---|---|---|---|---|
| Vertical Displacement [mm] | 30 | 45 | 60 | 90 | 120 | 140 |
| Swing Stiffness $\kappa_\theta$ | 67 | 73 | 79 | 71 | 64 | 69 |

FIG.21

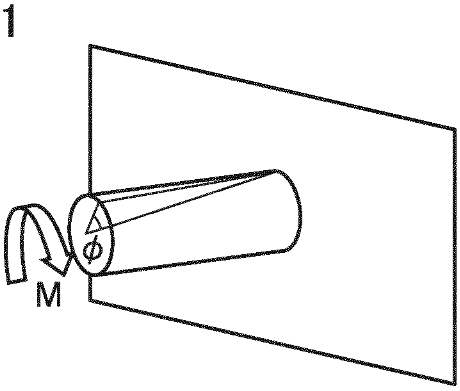
φ
M

FIG.22

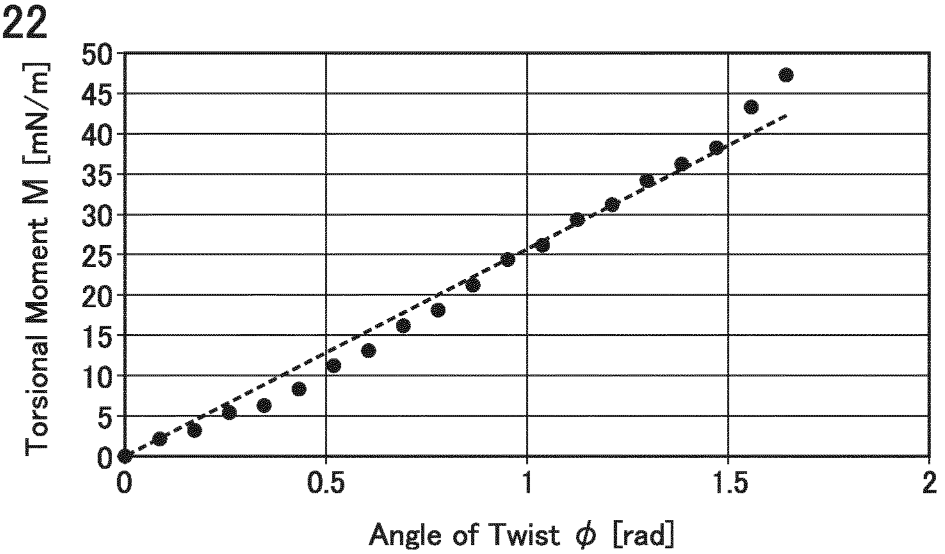
Torsional Moment M [mN/m]
0
5
10
15
20
25
30
35
40
45
50
0
0.5
1
1.5
2
Angle of Twist φ [rad]

FIG.23

Cable2 ×

| | | |
|---|---|---|
| ◢ Cable Guide | | |
| ◢ Cable Guide | 2-item collection | |
| ◢ [0] | | |
| Robot Link No. | 3 | |
| Cable Length | 200 | 191 |
| Guide CAD Data | 0.000 0.000 0.000 0.000 0.000 0.000 | |
| Guide location | | |
| Guide Offset X Parameters | 10,15,20,25 | 192 |
| Guide Offset Y Parameters | 10,15,20 | |
| Guide Offset Z Parameters | 10,20 | |
| Guide Yaw Parameters | 45,90 | |
| Guide Pitch Parameters | 45,90 | |
| Guide Roll Parameters | 0 | |
| Cable length Parameters | 100,120,140,160 | |
| ◢ [1] | | |
| Robot Link No. | 6 | |
| Cable Length | 200 | 191 |
| Guide CAD Data | 0.000 0.000 0.000 0.000 0.000 0.000 | |
| Guide location | | |
| Guide Offset X Parameters | 10,15,20,25 | 193 |
| Guide Offset Y Parameters | 10,15,20 | |
| Guide Offset Z Parameters | 10,20 | |
| Guide Yaw Parameters | 45,90 | |
| Guide Pitch Parameters | 45,90 | |
| Guide Roll Parameters | 0 | |
| Cable length Parameters | 100,120,140,160 | |
| ◢ Tool Links | | |
| Robot | | |
| ◢ 3D Visualization | | |
| Visible | ☑ | |
| Radius | 5.000 | |
| Cable Length | 200 | |
| Color | □#FF808080 | |
| Stretch Ratio[%] | 120 | |
| Color when over Stretch Ratio[%] | ▨#FF0000FF | 194 |
| Min Curvature Radius[mm] | 5 | |
| Color when over Min Curvature Radius[mm] | ▤#FFFF0000 | |
| Color when collide the cable | ▩#FF008000 | |
| Robustness against length[mm] | 20 | 195 |

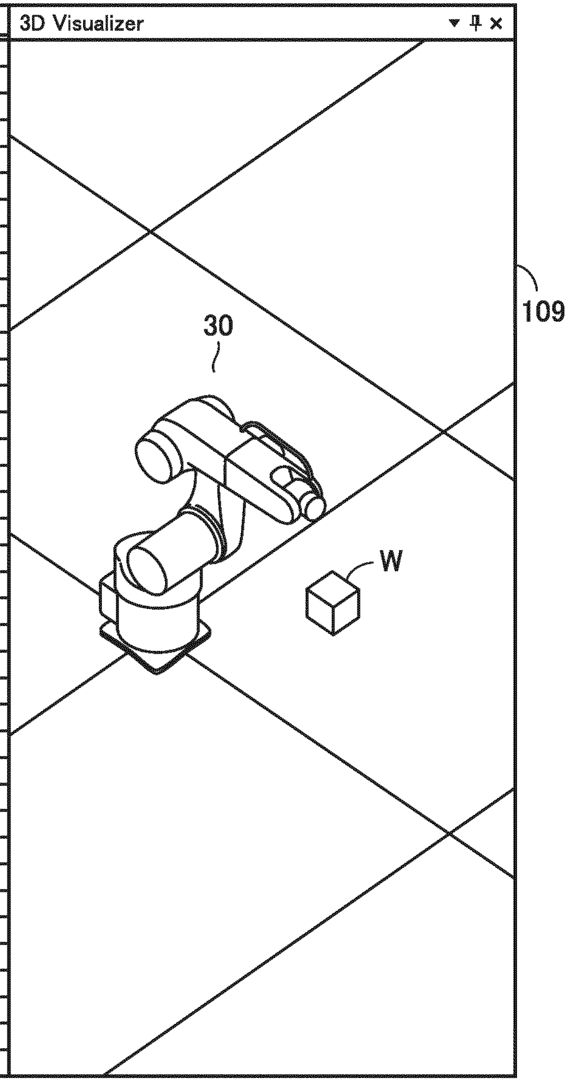

FIG.24

109

| G[0] | | | | | | | | | | | G[1] | | | | | | | | | |
|---|---|---|---|---|---|---|---|---|---|---|---|---|---|---|---|---|---|---|---|---|
| X | Y | Z | Yaw | Pitch | Roll | Length | Length | Length | Length | | X | Y | Z | Yaw | Pitch | Roll | Length | Length | Length | Length |
| 15 | 15 | 10 | 45 | 90 | 0 | 12 | 13 | 14 | 15 | | 15 | 15 | 10 | 45 | 90 | 0 | 12 | 13 | 14 | 15 |
| 10 | 15 | 10 | 45 | 90 | 0 | 13 | 14 | 15 | | | 15 | 15 | 10 | 45 | 90 | 0 | 13 | 14 | 15 | |

196

196

## INTERNATIONAL SEARCH REPORT

International application No.
PCT/JP2021/009843

A. CLASSIFICATION OF SUBJECT MATTER
Int. Cl. B25J19/00(2006.01)i, G05B17/00(2006.01)i, G06G7/62(2006.01)i, G06F30/20(2020.01)i
FI: B25J19/00 J, G06F30/20, G06G7/62, G05B17/00
According to International Patent Classification (IPC) or to both national classification and IPC

B. FIELDS SEARCHED
Minimum documentation searched (classification system followed by classification symbols)
Int. Cl. B25J19/00, G05B17/00, G06G7/62, G06F30/20

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2019-81242 A (SEIKO EPSON CORP.) 30 May 2019 (2019-05-30), abstract, paragraphs [0074], [0075] | 1-14 |
| A | JP 7-182017 A (NISSAN MOTOR CO., LTD.) 21 July 1995 (1995-07-21), paragraphs [0019]-[0036], fig. 2-7 | 1-14 |
| A | JP 2016-87750 A (FANUC LTD.) 23 May 2016 (2016-05-23), paragraphs [0008]-[0039], fig. 1-5 | 1-14 |
| A | JP 2005-293331 A (NISSAN MOTOR CO., LTD.) 20 October 2005 (2005-10-20), abstract | 1-14 |
| A | JP 2019-152971 A (OMRON CORP.) 12 September 2019 (2019-09-12), abstract | 1-14 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26.04.2021 | 18.05.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/009843

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-251741 A (MAZDA MOTOR CORP.) 14 September 2001 (2001-09-14), paragraph [0011] | 1-14 |
| A | JP 6-291190 A (MATSUSHITA ELECTRIC INDUSTRIAL CO., LTD.) 18 October 1994 (1994-10-18), claim 1, fig. 1 | 1-14 |

Form PCT/ISA/210 (continuation of second sheet) (January 2015)

**INTERNATIONAL SEARCH REPORT**
Information on patent family members

International application No.
PCT/JP2021/009843

| Patent Documents referred to in the Report | Publication Date | Patent Family | Publication Date |
|---|---|---|---|
| JP 2019-81242 A | 30.05.2019 | (Family: none) | |
| JP 7-182017 A | 21.07.1995 | (Family: none) | |
| JP 2016-87750 A | 23.05.2016 | US 2016/0132623 A1 paragraphs [0012]-[0048], fig. 1-5<br>DE 102015013988 A1<br>CN 105583823 A | |
| JP 2005-293331 A | 20.10.2005 | (Family: none) | |
| JP 2019-152971 A | 12.09.2019 | (Family: none) | |
| JP 2001-251741 A | 14.09.2001 | (Family: none) | |
| JP 6-291190 A | 18.10.1994 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016042378 A